# DEMANDE DE BREVET EUROPEEN

(11) **EP 4 832 259 A1**
(43) Date de publication de la demande: **28.10.2026**
(21) Numéro de dépôt: 26173835.5
(22) Date de dépôt: 21.04.2026
(51) Int. Cl.: H01R 13/193, H01M 50/503, H01M 50/517, H01R 11/28, H01R 13/11, H01R 13/641, H01R 13/18, H01R 101/00

(54) **CONNECTEUR ELECTRIQUE ET ENSEMBLE CONNECTEUR ELECTRIQUE**

(30) Priorité: 23.04.2025 FR 2504320
(71) Demandeur: A. Raymond et Cie, 38000 Grenoble (FR)
(72) Inventeur: SANCHEZ, Anthony, 38950 ST-MARTIN-LE-VINOUX (FR); LIU, Baojia, Zhenjiang City, 212009 (CN); LI, Yang, Zhenjiang City, 212009 (CN)
(74) Mandataire: Santarelli

(57) **Abrégé**

La présente invention propose un connecteur électrique (10) et un ensemble connecteur électrique (1) incluant le connecteur électrique. Le connecteur électrique (10) est adapté pour être monté sur un siège de montage (20) avec une partie d'activation afin d'être connecté électriquement à une borne électrique, et inclut : un boîtier (100) ; une unité de serrage (200), qui est conçue pour serrer la borne électrique ; et un organe d'actionnement (300), qui est apte à se déplacer par rapport au boîtier entre une première position et une deuxième position et est associé de manière fonctionnelle à l'unité de serrage. Le connecteur électrique (10) et l'ensemble connecteur électrique (1) selon la présente invention permettent de connecter le connecteur électrique à la borne électrique et de l'en déconnecter plusieurs fois sans endommager facilement la borne électrique, et peuvent également empêcher un fonctionnement accidentel de l'organe d'actionnement.

## Description

### Domaine technique

La présente invention concerne généralement le domaine de la technologie des connecteurs électriques, et porte plus précisément sur un connecteur électrique et un ensemble connecteur électrique incluant le connecteur électrique.

### Art antérieur

Le système d'alimentation des véhicules électriques inclut typiquement de multiples batteries. Ces batteries peuvent être intégrées de différentes manières dans la carrosserie du véhicule. Dans les systèmes traditionnels, ces batteries peuvent être connectées en série et/ou en parallèle pour former de multiples modules de batterie, qui sont en outre connectés en série et/ou en parallèle pour former un bloc-batterie, puis le bloc-batterie est intégré dans le plancher du véhicule. Afin d'améliorer l'utilisation de l'espace du véhicule et d'augmenter la capacité des batteries, des systèmes d'intégration de batterie plus compacts ont été développés ces dernières années, tels que le système CTP (Cell to Pack) et le système CTC (Cell to Chassis). Dans le système CTP, de multiples batteries peuvent être connectées directement en série et/ou en parallèle pour former un bloc-batterie qui est ensuite intégré dans le plancher du véhicule. Dans le système CTC, plusieurs batteries peuvent être montées en série et/ou en parallèle et directement intégrées dans le cadre de plancher du véhicule.

Typiquement, les connexions en série et/ou en parallèle entre de multiples batteries et/ou de multiples modules de batterie sont réalisées par le biais de barres omnibus. Les deux extrémités de la barre omnibus sont habituellement connectées aux bornes électriques de deux batteries et/ou modules de batterie par des boulons ou soudées aux bornes électriques de deux batteries et/ou modules de batterie, mais cette opération de connexion électrique prend du temps. Actuellement, certains dispositifs de connexion électrique enfichables pour connecter des batteries et/ou des modules de batterie ont été développés, tels que le connecteur de module enfichable divulgué dans le document WO2019242917A1.

Il est souhaitable de développer un connecteur électrique pour connecter des bornes électriques de batteries et/ou de modules de batterie avec une ou plusieurs des caractéristiques suivantes : structure compacte, capacité à se connecter à la borne électrique et à se déconnecter de celle-ci plusieurs fois sans endommager facilement la borne électrique, opération de connexion simple, capacité à établir une connexion sûre à la borne électrique et fonctions anti-dysfonctionnement/anti-erreur.

### Exposé de l'invention

La présente invention a pour but de résoudre les problèmes existant dans l'art antérieur susmentionné et de proposer un connecteur électrique amélioré et un ensemble connecteur électrique incluant ce connecteur électrique.

À cet effet, le premier aspect de la présente invention propose un connecteur électrique. Le connecteur électrique est adapté pour être monté sur un siège de montage afin d'être connecté électriquement à une borne électrique, et inclut : un boîtier ; une unité de serrage, qui est au moins partiellement disposée à l'intérieur du boîtier, l'unité de serrage présente une partie de connexion électrique ; et un organe d'actionnement, qui est apte à se déplacer par rapport au boîtier entre une première position et une deuxième position. L'organe d'actionnement est adapté pour être dans la première position avant que le connecteur électrique ne soit monté sur le siège de montage et n'interfère mécaniquement avec le boîtier pour empêcher l'organe d'actionnement de se déplacer vers la deuxième position, et l'organe d'actionnement est adapté pour se déformer, de préférence élastiquement, en raison d'un contact par pression avec le siège de montage pendant le processus de montage du connecteur électrique sur le siège de montage, de sorte que, lorsque le connecteur électrique est complètement monté dans le siège de montage, l'organe d'actionnement se libère de l'interférence mécanique avec le boîtier pour permettre à l'organe d'actionnement de se déplacer vers la deuxième position. La partie de connexion électrique est adaptée pour être connectée électriquement à la borne électrique lorsque l'organe d'actionnement est dans la deuxième position.

Sur la base du concept technique ci-dessus, la présente invention peut en outre inclure l'un quelconque ou plusieurs des modes de réalisation optionnels suivants.

Dans certains modes de réalisation optionnels, l'organe d'actionnement est associé de manière fonctionnelle à l'unité de serrage ; l'unité de serrage est adaptée, lorsque l'organe d'actionnement est dans la deuxième position, pour permettre une connexion électrique plus sûre entre la partie de connexion électrique et la borne électrique que lorsqu'il est dans la première position. Dans certains modes de réalisation, l'unité de serrage est adaptée, lorsque l'organe d'actionnement est dans la première position, pour se libérer de la borne électrique ou pour serrer la borne électrique avec une première force de serrage, et lorsque l'organe d'actionnement est dans la deuxième position, pour serrer la borne électrique avec une deuxième force de serrage, la deuxième force de serrage étant supérieure à la première force de serrage, de façon à établir une connexion électrique plus sûre.

Dans certains modes de réalisation optionnels, l'unité de serrage est apte à basculer entre un état initial et un état de fonctionnement ; l'unité de serrage passe de l'état initial à l'état de fonctionnement en réponse au déplacement de l'organe d'actionnement de la première position à la deuxième position le long de la direction de déplacement.

Dans certains modes de réalisation optionnels, l'organe d'actionnement est adapté pour se déformer élastiquement en raison d'un contact par pression avec le siège de montage pendant le processus de montage du connecteur électrique sur le siège de montage.

Dans certains modes de réalisation optionnels, l'organe d'actionnement est adapté pour se déformer élastiquement en raison d'un contact par pression avec le siège de montage pendant le processus de montage du connecteur électrique sur le siège de montage.

Dans certains modes de réalisation optionnels, le boîtier inclut une première partie de limitation, dans lequel l'organe d'actionnement inclut un porte-à-faux, le porte-à-faux inclut une deuxième partie de limitation, dans lequel la première partie de limitation est apte à interférer mécaniquement avec la deuxième partie de limitation lorsque l'organe d'actionnement est dans la première position, pour empêcher l'organe d'actionnement de se déplacer vers la deuxième position.

Dans certains modes de réalisation optionnels, la première partie de limitation et la deuxième partie de limitation incluent respectivement une première surface de limitation et une deuxième surface de limitation, dans lesquelles la première surface de limitation est adaptée pour venir en butée contre la deuxième surface de limitation lorsque l'organe d'actionnement est dans la première position, dans lesquelles la première surface de limitation et la deuxième surface de limitation sont perpendiculaires à la direction de déplacement.

Dans certains modes de réalisation optionnels, le porte-à-faux inclut une partie d'ajustement, le siège de montage comporte une partie d'activation, dans lequel la partie d'ajustement est adaptée pour déformer élastiquement le porte-à-faux dans une direction éloignée de la première partie de limitation en raison d'un contact par pression avec la partie d'activation pendant le processus de montage du connecteur électrique sur le siège de montage.

Dans certains modes de réalisation optionnels, au moins l'une de la partie d'activation et de la partie d'ajustement inclut une pente inclinée par rapport à la direction de montage du connecteur électrique sur le siège de montage.

Dans certains modes de réalisation optionnels, le porte-à-faux est au moins partiellement logé à l'intérieur du boîtier, dans lequel le boîtier inclut une fenêtre, dans lequel la partie d'ajustement est adaptée pour s'étendre dans la fenêtre pour établir un contact par pression avec la partie d'activation, et/ou la partie d'activation est adaptée pour s'étendre dans la fenêtre pour établir un contact par pression avec la partie d'ajustement.

Dans certains modes de réalisation optionnels, le boîtier inclut une première partie de maintien, et l'organe d'actionnement inclut une deuxième partie de maintien, dans lequel la première partie de maintien interfère mécaniquement avec la deuxième partie de maintien lorsque l'organe d'actionnement est dans la première position, pour empêcher l'organe d'actionnement de se détacher du boîtier.

Dans certains modes de réalisation optionnels, la première partie de maintien et la deuxième partie de maintien se présentent toutes deux sous la forme de saillies ; ou le boîtier inclut un canal de réception pour loger l'organe d'actionnement, l'extrémité du canal de réception est formée en tant que première partie de maintien, et la deuxième partie de maintien s'étend à partir du canal de réception et se présente sous la forme d'une cannelure.

Dans certains modes de réalisation optionnels, la direction de déplacement est dans la même direction que la direction de montage du connecteur électrique sur le siège de montage.

Dans certains modes de réalisation optionnels, l'unité de serrage inclut un dispositif de serrage par contact et un dispositif de serrage élastique, le dispositif de serrage par contact est retenu à l'intérieur du boîtier et conçu pour serrer la borne électrique, le dispositif de serrage élastique est agencé sur l'extérieur du dispositif de serrage par contact et conçu pour serrer le dispositif de serrage par contact, dans lequel le dispositif de serrage élastique est fixé à l'organe d'actionnement pour se déplacer avec l'organe d'actionnement, de sorte que : lorsque l'organe d'actionnement est dans la première position, le dispositif de serrage par contact soit libéré de la force de serrage du dispositif de serrage élastique, et lorsque l'organe d'actionnement est dans la deuxième position, le dispositif de serrage par contact soit soumis à la force de serrage du dispositif de serrage élastique.

Dans certains modes de réalisation optionnels, le dispositif de serrage élastique inclut une première partie de serrage et une deuxième partie de serrage pour serrer le dispositif de serrage par contact entre elles, au moins l'une de la première partie de serrage et de la deuxième partie de serrage inclut une partie coulissante, dans lequel le boîtier inclut une partie de guidage, dans lequel la partie coulissante est supportée par la partie de guidage et peut coulisser le long de la partie de guidage pour modifier la distance entre la première partie de serrage et la deuxième partie de serrage, dans lequel la distance diminue lorsque l'organe d'actionnement se déplace de la première position à la deuxième position.

Dans certains modes de réalisation optionnels, le boîtier inclut une chambre de réception avec une extrémité ouverte, dans lequel l'organe d'actionnement est au moins partiellement inséré dans la chambre de réception à travers l'extrémité ouverte, dans lequel lorsque l'organe d'actionnement est dans la deuxième position, l'organe d'actionnement recouvre l'extrémité ouverte et l'unité de serrage est située à l'intérieur de la chambre de réception.

Dans certains modes de réalisation optionnels, l'unité de serrage inclut un dispositif de serrage par contact, le dispositif de serrage par contact est retenu à l'intérieur du boîtier et conçu pour serrer la borne électrique, dans lequel l'organe d'actionnement est au moins partiellement disposé à l'intérieur du dispositif de serrage par contact et conçu pour faire passer le dispositif de serrage par contact d'un état ouvert à un état fermé de manière correspondante lors du déplacement de la première position à la deuxième position.

Dans certains modes de réalisation optionnels, le dispositif de serrage par contact inclut une première partie de contact et une deuxième partie de contact pour serrer la borne électrique entre elles, dans lequel l'organe d'actionnement inclut une partie d'espacement, la partie d'espacement est disposée entre la première partie de contact et la deuxième partie de contact, et dans lequel la première partie de contact et la deuxième partie de contact sont en contact par pression avec la partie d'espacement lorsque l'organe d'actionnement est dans la première position pour ouvrir le dispositif de serrage par contact, et se libèrent de tout contact avec la partie d'espacement lorsque l'organe d'actionnement se déplace vers la deuxième position pour fermer le dispositif de serrage par contact.

Dans certains modes de réalisation optionnels, la partie d'espacement inclut une section d'expansion et une section de contraction adjacentes l'une à l'autre dans la direction de déplacement, dans laquelle la première partie de contact et la deuxième partie de contact sont alignées avec et en contact par pression avec la section d'expansion lorsque l'organe d'actionnement est dans la première position, et sont alignées avec la section de contraction lorsque l'organe d'actionnement est dans la deuxième position.

Dans certains modes de réalisation optionnels, l'unité de serrage inclut également un dispositif de serrage élastique, le dispositif de serrage élastique est agencé sur l'extérieur du dispositif de serrage par contact et conçu pour serrer le dispositif de serrage par contact.

Dans certains modes de réalisation optionnels, le connecteur électrique inclut au moins deux unités de serrage et au moins deux organes d'actionnement, chaque organe d'actionnement est associé de manière fonctionnelle à une unité de serrage correspondante, dans lequel le connecteur électrique inclut également un conducteur, le conducteur est connecté électriquement aux dispositifs de serrage par contact des au moins deux unités de serrage.

Le deuxième aspect de la présente invention propose un ensemble connecteur électrique, l'ensemble connecteur électrique inclut un siège de montage et le connecteur électrique selon le premier aspect de la présente invention, dans lequel le siège de montage inclut une partie d'activation, le connecteur électrique est adapté pour être monté sur le siège de montage afin d'être connecté électriquement à la borne électrique.

Dans certains modes de réalisation optionnels, le boîtier du connecteur électrique inclut une première partie de verrouillage, le siège de montage inclut une deuxième partie de verrouillage, dans lequel la première partie de verrouillage vient en prise avec la deuxième partie de verrouillage lorsque le connecteur électrique est complètement monté dans le siège de montage, pour empêcher le connecteur électrique de se détacher du siège de montage.

Dans certains modes de réalisation optionnels, le boîtier inclut une partie aile, la première partie de verrouillage est placée à l'extrémité libre de la partie aile et se présente sous la forme d'une cannelure, dans lequel la deuxième partie de verrouillage se présente sous la forme d'une nervure.

Dans certains modes de réalisation optionnels, le siège de montage est conçu pour être approprié pour entourer la borne électrique.

Selon le connecteur électrique et l'ensemble connecteur électrique de la présente invention, l'organe d'actionnement est dans la première position lorsque le connecteur électrique n'est pas encore complètement inséré/installé dans le siège de montage. À ce stade, l'unité de serrage est à l'état initial et peut être libérée de la borne électrique ou peut serrer la borne électrique avec une force de serrage initiale plus faible, permettant ainsi d'insérer facilement la borne électrique dans l'unité de serrage lors de l'insertion/installation du connecteur électrique dans le siège de montage, réduisant ainsi l'usure de la couche de placage conductrice de la borne électrique, par exemple, pour permettre des connexions et des déconnexions multiples entre le connecteur électrique et la borne électrique. L'organe d'actionnement peut se déplacer vers la deuxième position lorsque le connecteur électrique est complètement inséré/installé dans le siège de montage (à ce stade, la borne électrique est complètement insérée dans l'unité de serrage), ce qui permet à l'unité de serrage de passer à l'état de fonctionnement et de serrer solidement la borne électrique avec une force de serrage de fonctionnement plus importante, pour ainsi obtenir une connexion mécanique et électrique fiable entre le connecteur électrique et la borne électrique. L'organe d'actionnement ne peut se déplacer vers la deuxième position qu'après que le connecteur électrique est complètement inséré/installé dans le siège de montage, ce qui peut empêcher un déplacement accidentel de l'organe d'actionnement vers la deuxième position pendant le transport du connecteur électrique, et également empêcher un déplacement accidentel de l'organe d'actionnement vers la deuxième position lorsque la borne électrique n'est pas encore complètement insérée dans l'unité de serrage, évitant ainsi une connexion incorrecte entre le connecteur électrique et la borne électrique.

### Brève description des dessins

D'autres caractéristiques et avantages de la présente invention seront mieux compris à travers les modes de réalisation optionnels suivants décrits en détail en référence aux dessins annexés, dans lesquels les mêmes numéros de référence identifient les mêmes composants ou des composants similaires :
la figure 1 est une vue en perspective de l'ensemble connecteur électrique selon le premier mode de réalisation de la présente invention appliqué à un module de batterie, où le connecteur électrique de l'ensemble connecteur électrique n'est pas encore inséré dans le siège de montage ;
la figure 2 est une vue en perspective de l'ensemble connecteur électrique selon le premier mode de réalisation de la présente invention appliqué à un module de batterie, où le connecteur électrique de l'ensemble connecteur électrique est complètement inséré dans le siège de montage, et le connecteur électrique est connecté électriquement à la borne électrique dans le siège de montage ;
la figure 3 est une vue en perspective du connecteur électrique de l'ensemble connecteur électrique selon le premier mode de réalisation de la présente invention ;
les figures 4A à 4C sont des vues en coupe du connecteur électrique de l'ensemble connecteur électrique selon le premier mode de réalisation de la présente invention, découpées le long de différents plans au niveau de l'organe d'actionnement et de l'unité de serrage ;
la figure 5 est une vue éclatée du connecteur électrique de l'ensemble connecteur électrique selon le premier mode de réalisation de la présente invention ;
la figure 6A est une vue en perspective de l'organe d'actionnement du connecteur électrique de l'ensemble connecteur électrique selon le premier mode de réalisation de la présente invention ;
la figure 6B est une vue en coupe du premier corps de boîtier du boîtier du connecteur électrique de l'ensemble connecteur électrique selon le premier mode de réalisation de la présente invention ;
les figures 7A à 7C sont des vues en coupe le long de différents plans de l'ensemble connecteur électrique selon le premier mode de réalisation de la présente invention lorsque le connecteur électrique est initialement inséré dans le siège de montage et que l'organe d'actionnement du connecteur électrique est dans la première position ;
les figures 8A à 8C sont des vues en coupe le long de différents plans de l'ensemble connecteur électrique selon le premier mode de réalisation de la présente invention lorsque le connecteur électrique est complètement inséré dans le siège de montage et que l'organe d'actionnement du connecteur électrique est dans la deuxième position ;
la figure 9 est une vue en perspective de l'ensemble connecteur électrique selon le deuxième mode de réalisation de la présente invention, où le connecteur électrique de l'ensemble connecteur électrique n'est pas encore inséré dans le siège de montage ;
la figure 10 est une vue éclatée du connecteur électrique de l'ensemble connecteur électrique selon le deuxième mode de réalisation de la présente invention ;
les figures 11A et 11B sont des vues en coupe différentes d'une partie du connecteur électrique de l'ensemble connecteur électrique selon le deuxième mode de réalisation de la présente invention ;
la figure 12A est une vue en perspective du premier corps de boîtier du boîtier du connecteur électrique de l'ensemble connecteur électrique selon le deuxième mode de réalisation de la présente invention ;
la figure 12B est une vue en perspective de l'organe d'actionnement du connecteur électrique de l'ensemble connecteur électrique selon le deuxième mode de réalisation de la présente invention ;
les figures 13A et 13B sont des vues en perspective du dispositif de serrage par contact et du dispositif de serrage élastique du connecteur électrique de l'ensemble connecteur électrique selon le deuxième mode de réalisation de la présente invention ;
les figures 14A à 14C sont des vues en coupe le long de différents plans de l'ensemble connecteur électrique selon le deuxième mode de réalisation de la présente invention lorsque le connecteur électrique est initialement inséré dans le siège de montage et que l'organe d'actionnement du connecteur électrique est dans la première position ;
les figures 15A à 15B sont des vues en coupe le long de différents plans de l'ensemble connecteur électrique selon le deuxième mode de réalisation de la présente invention lorsque le connecteur électrique est complètement inséré dans le siège de montage et que l'organe d'actionnement du connecteur électrique est dans la première position ;
les figures 16A à 16C sont des vues en coupe le long de différents plans de l'ensemble connecteur électrique selon le deuxième mode de réalisation de la présente invention lorsque le connecteur électrique est complètement inséré dans le siège de montage et que l'organe d'actionnement du connecteur électrique est dans la deuxième position ;
les figures 17A et 17B sont une vue partielle en perspective et une vue en coupe du processus de démontage du connecteur électrique de l'ensemble connecteur électrique selon le deuxième mode de réalisation de la présente invention, où l'organe d'actionnement du connecteur électrique est déplacé vers la première position ;
les figures 18A et 18B sont une vue partielle en perspective et une vue en coupe du processus de démontage du connecteur électrique de l'ensemble connecteur électrique selon le deuxième mode de réalisation de la présente invention, où le premier corps de boîtier du connecteur électrique est libéré du siège de montage ; et
les figures 19A et 19B représentent des variations du siège de montage de l'ensemble connecteur électrique selon le deuxième mode de réalisation de la présente invention.

### Description détaillée des modes de réalisation

La mise en oeuvre et l'utilisation des modes de réalisation vont maintenant être abordées en détail. Cependant, il convient de comprendre que les modes de réalisation spécifiques abordés ne sont que des exemples illustratifs de modes particuliers de mise en œuvre et d'utilisation de la présente invention, et ne limitent pas la portée de l'invention. Lors de la description de la structure et de la position de divers composants, des termes tels que « haut », « bas », « supérieur(e) », « inférieur(e) », etc., sont relatifs plutôt qu'absolus. Lorsque les composants sont agencés comme indiqué sur les figures, ces termes de position sont appropriés, mais lorsque les positions des composants sur les figures changent, ces termes de position changent également en conséquence.

Les termes tels que « premier », « première », « deuxième », etc., sont utilisés uniquement à des fins descriptives et ne doivent pas être compris comme indiquant ou impliquant une importance relative ou indiquant implicitement le nombre de caractéristiques techniques auxquelles il est fait référence. Dans la présente invention, sauf indication contraire explicite, les termes tels que « installer », « connecter », « connecter », « fixer », etc., doivent être compris au sens large. Par exemple, il peut s'agir de connexions fixes, de connexions détachables ou de connexions intégrées ; les éléments peuvent être directement connectés ou indirectement connectés par des supports intermédiaires. Pour l'homme du métier, la signification spécifique de ces termes dans la présente invention peut être comprise selon le contexte spécifique.

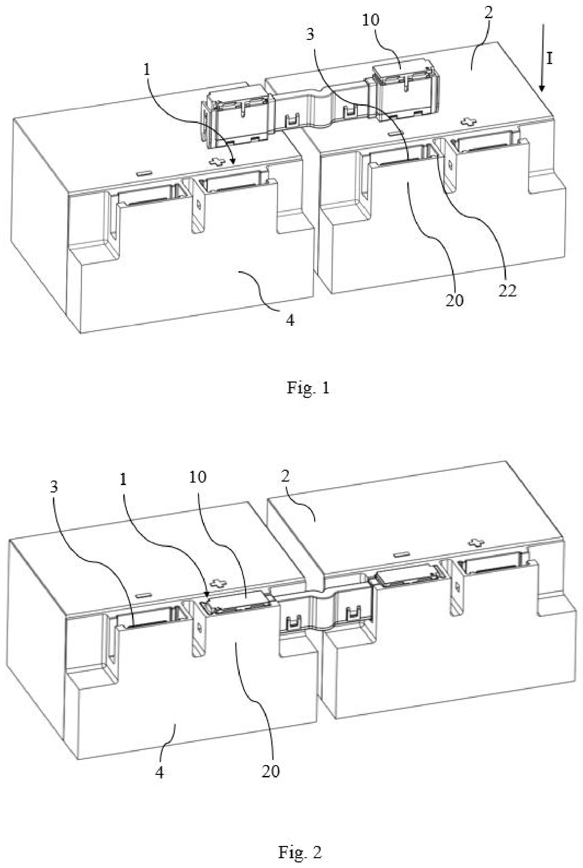

Les figures 1 à 8C représentent l'ensemble connecteur électrique et ses composants selon le premier mode de réalisation de la présente invention.

En référence aux figures 1, 2 et 7A, l'ensemble connecteur électrique 1 peut inclure un connecteur électrique 10. Dans le mode de réalisation illustré, le connecteur électrique 10 peut être utilisé pour connecter la borne électrique 3 du module de batterie 2 afin d'obtenir une connexion en série ou en parallèle entre des modules de batterie 2. Il peut être envisagé que le connecteur électrique puisse également être utilisé pour la connexion électrique de bornes électriques de cellules de batterie ou d'autres composants électriques.

L'ensemble connecteur électrique 1 peut également inclure un siège de montage 20. Le connecteur électrique 10 est adapté pour être installé/inséré dans le siège de montage 20 afin d'être connecté électriquement à la borne électrique 3. Le siège de montage 20 peut être placé de façon à entourer la borne électrique 3 afin d'éviter tout contact accidentel avec la borne électrique 3 par les opérateurs lors de la connexion du connecteur électrique 10 à la borne électrique 3 ou de sa déconnexion de celle-ci, améliorant ainsi la sécurité électrique de l'ensemble connecteur électrique 1. Le siège de montage 20 peut présenter une structure en forme de caisson et inclure une partie d'activation/partie de pression 21 à l'intérieur, dont la fonction sera décrite en détail ci-dessous. Facultativement, le siège de montage 20 peut être en plastique. Il peut être envisagé, dans certains autres modes de réalisation non représentés, que le siège de montage puisse également présenter d'autres structures appropriées tant qu'il inclut une partie d'activation. Dans le mode de réalisation illustré, le siège de montage 20 est formé de façon à faire partie intégrante de la plaque d'extrémité de module 4. Il peut être envisagé, dans certains autres modes de réalisation, que le siège de montage puisse être formé séparément et puisse être connecté à la plaque d'extrémité de module ou à une autre structure de support, par exemple, par soudage, encliquetage, rivetage, vissage, etc. La borne électrique 3 peut être fixée au siège de montage 20. Facultativement, la borne électrique 3 peut être en cuivre ou en alliage de cuivre. La surface de la borne électrique 3 peut présenter une couche de placage conductrice, telle que, mais sans s'y limiter, une couche de placage d'argent, pour réduire la résistance de contact.

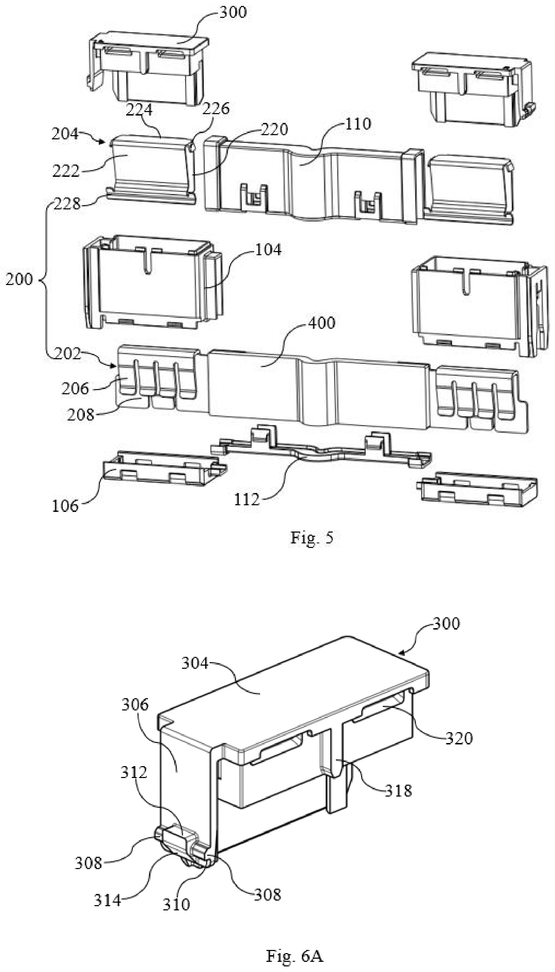

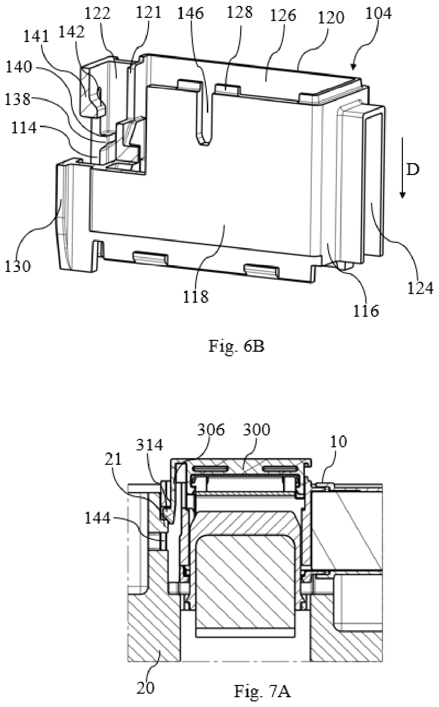

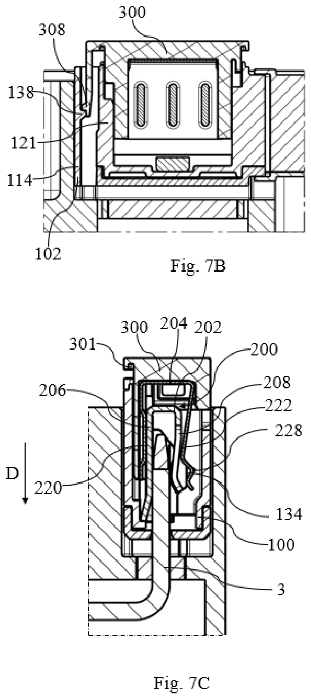

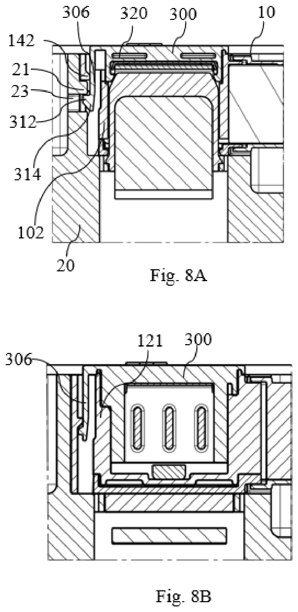

En référence aux figures 1 à 3, à la figure 5 et aux figures 7A à 8C, le connecteur électrique 10 peut inclure un boîtier 100, une unité de serrage 200 et un organe d'actionnement 300. L'unité de serrage 200 est disposée au moins partiellement à l'intérieur du boîtier 100. Dans certains modes de réalisation, l'unité de serrage 200 comporte l'unité de serrage une partie de connexion électrique. Optionnellement, l'unité de serrage 200 est configurée pour serrer la borne électrique 3 afin d'être connectée électriquement à la borne électrique 3. L'organe d'actionnement 300 est apte à se déplacer par rapport au boîtier 100 entre une première position représentée sur les figures 1, 3 et 7A à 7C et une deuxième position représentée sur les figures 2 et 8A à 8C, et est associé de manière fonctionnelle à l'unité de serrage 200. L'organe d'actionnement 300 est adapté pour être dans la première position avant que le connecteur électrique 10 ne soit inséré/installé dans le siège de montage 20 et n'interfère mécaniquement avec le boîtier 100 pour empêcher l'organe d'actionnement 300 de se déplacer vers la deuxième position. L'organe d'actionnement 300 est adapté pour se déformer, de préférence élastiquement, en raison d'un contact par pression avec la partie d'activation 21 pendant le processus d'insertion/d'installation du connecteur électrique 10 dans le siège de montage 20, de sorte que, lorsque le connecteur électrique 10 est complètement inséré/installé dans le siège de montage 20, l'organe d'actionnement 300 se libère de toute interférence mécanique avec le boîtier 100 pour permettre à l'organe d'actionnement 300 de se déplacer vers la deuxième position. Dans un mode de réalisation préféré, l'organe d'actionnement 300 est adapté pour se déformer élastiquement en raison d'un contact par pression avec la partie d'activation 21 pendant le processus d'insertion/d'installation du connecteur électrique 10 dans le siège de montage 20.

Dans certains modes de réalisation optionnels, l'organe d'actionnement 300 est associé de manière fonctionnelle à l'unité de serrage 200 ; l'unité de serrage est adaptée, lorsque l'organe d'actionnement est dans la deuxième position, pour permettre une connexion électrique plus sûre entre la partie de connexion électrique et la borne électrique que lorsqu'il est dans la première position. Dans certains modes de réalisation, l'unité de serrage est adaptée, lorsque l'organe d'actionnement est dans la première position, pour se libérer de la borne électrique ou pour serrer la borne électrique avec une première force de serrage, et lorsque l'organe d'actionnement est dans la deuxième position, pour serrer la borne électrique avec une deuxième force de serrage, la deuxième force de serrage étant supérieure à la première force de serrage, de façon à établir une connexion électrique plus sûre pour l'homme du métier.

Dans certains modes de réalisation optionnels, l'unité de serrage 200 est apte à basculer entre un état initial et un état de fonctionnement ; l'unité de serrage passe de l'état initial à l'état de fonctionnement en réponse au déplacement de l'organe d'actionnement 300 de la première position à la deuxième position le long de la direction de déplacement (D).

L'organe d'actionnement 300 du connecteur électrique 10 est dans la première position lorsque le connecteur électrique 10 n'est pas encore complètement inséré/installé dans le siège de montage 20. À ce stade, l'unité de serrage 200 est à l'état initial et peut serrer la borne électrique 3 avec une force de serrage initiale plus faible, permettant ainsi à la borne électrique 3 d'être facilement insérée dans l'unité de serrage 200 pendant l'insertion/installation du connecteur électrique 10 dans le siège de montage 20, réduisant ainsi l'usure de la couche de placage conductrice de la borne électrique. L'organe d'actionnement 300 peut se déplacer vers la deuxième position lorsque le connecteur électrique 10 est complètement inséré/installé dans le siège de montage 20, ce qui permet à l'unité de serrage 200 de passer à l'état de fonctionnement et de serrer solidement la borne électrique 3 avec une force de serrage de fonctionnement plus importante, pour ainsi obtenir une connexion mécanique et électrique fiable entre le connecteur électrique 10 et la borne électrique 3. L'organe d'actionnement 300 ne peut se déplacer vers la deuxième position qu'après que le connecteur électrique 10 est complètement inséré/installé dans le siège de montage 20, ce qui peut empêcher un déplacement accidentel de l'organe d'actionnement 300 vers la deuxième position pendant le transport du connecteur électrique 10, et également empêcher un déplacement accidentel de l'organe d'actionnement 300 vers la deuxième position lorsque le connecteur électrique 10 est initialement inséré dans le siège de montage 20 mais pas complètement inséré (à ce stade, la borne électrique 3 n'est pas encore complètement insérée dans l'unité de serrage 200), évitant ainsi une connexion incorrecte entre le connecteur électrique 10 et la borne électrique 3.

Dans le mode de réalisation illustré, la direction de déplacement D de l'organe d'actionnement 300 de la première position à la deuxième position peut être dans la même direction que la direction d'insertion I du connecteur électrique 10 dans le siège de montage 20. La direction de déplacement D et la direction d'insertion I peuvent toutes deux être verticalement vers le bas. Ainsi, par application d'une force externe (par exemple, une pression verticalement vers le bas) dans la même direction sur le connecteur électrique 10 (plus précisément, sur le dessus de l'organe d'actionnement 300), le connecteur électrique 10 peut être inséré dans le siège de montage 20 et l'organe d'actionnement 300 peut être déplacé de la première position à la deuxième position. Cela facilitera l'automatisation de l'opération de connexion électrique entre le connecteur électrique 10 et la borne électrique 3.

En référence aux figures 1, 3 et 5, dans le mode de réalisation illustré, l'ensemble connecteur électrique 1 peut inclure deux sièges de montage 20. Le connecteur électrique 10 peut inclure deux unités de serrage 200 et deux organes d'actionnement 300. Chaque organe d'actionnement 300 peut être associé de manière fonctionnelle à une unité de serrage 200 correspondante. Le connecteur électrique 10 peut également inclure un conducteur 400. Le conducteur 400 peut être une barre omnibus. La barre omnibus 400 et les parties des unités de serrage 200 qui entrent en contact avec les bornes électriques 3 peuvent être constituées d'un matériau conducteur. Les deux extrémités de la barre omnibus 400 peuvent être connectées mécaniquement et électriquement aux deux unités de serrage 200 respectivement. Chaque unité de serrage 200 peut serrer une borne électrique 3 correspondante. Ainsi, par le biais de la barre omnibus 400 et des deux unités de serrage 200 du connecteur électrique 10, deux bornes électriques 3 de, par exemple, deux modules de batterie 2 peuvent être connectées électriquement l'une à l'autre, connectant ainsi électriquement, par exemple, deux modules de batterie 2 entre eux.

En référence aux figures 1, 3 et 5 à 8C, dans le mode de réalisation illustré, le boîtier 100 peut inclure deux premiers corps de boîtier 102. Chaque premier corps de boîtier 102 peut loger une unité de serrage 200 correspondante. Chaque organe d'actionnement 300 peut être monté sur un premier corps de boîtier 102 correspondant. Chaque premier corps de boîtier 102 est adapté pour être inséré dans un siège de montage 20 correspondant. Le siège de montage 20 peut présenter une forme correspondant au premier corps de boîtier 102. Chaque premier corps de boîtier 102 peut inclure un premier corps de boîtier 104 et un premier couvercle inférieur 106. Le premier couvercle inférieur 106 peut être connecté de manière détachable au premier corps de boîtier 104, par exemple, par encliquetage. Dans le mode de réalisation illustré, le boîtier 100 peut également inclure un deuxième corps de boîtier 108. Le deuxième corps de boîtier 108 peut loger la barre omnibus 400. Le deuxième corps de boîtier 108 peut inclure un deuxième corps de boîtier 110 et un deuxième couvercle inférieur 112. Le deuxième couvercle inférieur 112 peut être connecté de manière détachable au deuxième corps de boîtier 110, par exemple, par encliquetage. Le boîtier 100 et l'organe d'actionnement 300 peuvent être en plastique.

Il peut être envisagé, dans certains autres modes de réalisation non représentés, que le connecteur électrique puisse également inclure plus de deux unités de serrage et plus d'une barre omnibus, permettant au connecteur électrique de connecter électriquement plus de deux bornes électriques ensemble ; de manière correspondante, le connecteur électrique peut inclure plus de deux premiers corps de boîtier, plus d'un deuxième corps de boîtier et plus de deux organes d'actionnement ; dans lequel chaque organe d'actionnement peut être associé de manière fonctionnelle à une unité de serrage correspondante.

Dans le mode de réalisation illustré, le premier corps de boîtier 104 de chaque premier composant de boîtier 102 peut présenter une forme généralement de type boîte et inclure une première paroi latérale 114, une deuxième paroi latérale 116, une troisième paroi latérale 118, une quatrième paroi latérale 120 et une paroi de séparation 121. La première paroi latérale 114 et la deuxième paroi latérale 116 sont opposées l'une à l'autre, et la troisième paroi latérale 118 et la quatrième paroi latérale 120 sont opposées l'une à l'autre. La première paroi latérale 114, la paroi de séparation 121, la troisième paroi latérale 118 et la quatrième paroi latérale 120 forment/définissent ensemble un canal de réception 122 s'étendant le long de la direction de déplacement D de l'organe d'actionnement 300, dont la fonction sera décrite ci-dessous. La paroi de séparation 121, la deuxième paroi latérale 116, la troisième paroi latérale 118 et la quatrième paroi latérale 120 forment/définissent ensemble une chambre de réception 126 avec un dessus ouvert pour loger l'unité de serrage 200 correspondante. Le premier corps de boîtier 104 peut également inclure un orifice de connexion 124 adjacent à la deuxième paroi latérale 116 pour être connecté à l'extrémité longitudinale du deuxième corps de boîtier 110.

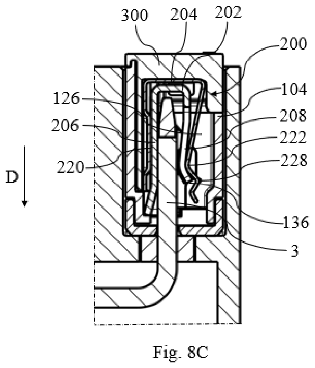

Dans le mode de réalisation illustré, comme le montre la figure 8C, lorsque l'organe d'actionnement 300 est dans la deuxième position, l'organe d'actionnement 300 recouvre le dessus ouvert de la chambre de réception 126 du premier corps de boîtier 104 (plus précisément, il recouvre l'espace circonférentiel entre l'organe d'actionnement 300 et le dessus ouvert de la chambre de réception 126) et l'unité de serrage 200 est située à l'intérieur de la chambre de réception 126, pour empêcher tout contact accidentel avec l'unité de serrage 200 par des opérateurs et empêcher l'entrée de fluides et de poussière provenant de l'extérieur à l'intérieur du connecteur électrique 10, améliorant ainsi la sécurité électrique du connecteur électrique 10. Dans le mode de réalisation illustré, de multiples nervures de mise en prise 128 (voir figure 6B) peuvent être ménagées au niveau du bord supérieur du premier corps de boîtier 104, et l'organe d'actionnement 300 peut présenter de manière correspondante de multiples encoches de mise en prise 301 (voir figure 7C). Chaque nervure de mise en prise 128 peut venir en prise avec une encoche de mise en prise 301 correspondante lorsque l'organe d'actionnement 300 est dans la deuxième position, permettant à l'organe d'actionnement 300 de recouvrir étroitement le dessus ouvert de la chambre de réception 126.

Dans le mode de réalisation illustré, la première paroi latérale 114 de chaque premier composant de boîtier 102 peut également inclure une bride de guidage 130 (voir figure 6B) s'étendant le long de la direction d'insertion I du connecteur électrique 10. De manière correspondante, le siège de montage 20 peut inclure un évidement de guidage 22 (voir figure 1) s'étendant le long de la direction d'insertion I du connecteur électrique 10. Au cours du processus d'insertion du connecteur électrique 10 (plus précisément, du premier composant de boîtier 102) dans le siège de montage 20, la bride de guidage 130 peut coulisser le long de l'évidement de guidage 22 pour guider le connecteur électrique 10 dans le siège de montage 20.

Dans le mode de réalisation illustré, le deuxième corps de boîtier 110 du deuxième composant de boîtier 108 peut présenter une forme correspondant à la barre omnibus 400, et peut ainsi présenter une structure incurvée dans sa partie centrale.

Dans le mode de réalisation illustré, le connecteur électrique 10 présente une structure symétrique. Par souci de clarté et de concision dans la description suivante, nous allons principalement décrire l'un des deux premiers composants de boîtier 102 du connecteur électrique 10 et l'organe d'actionnement 300 et l'unité de serrage 200 correspondants.

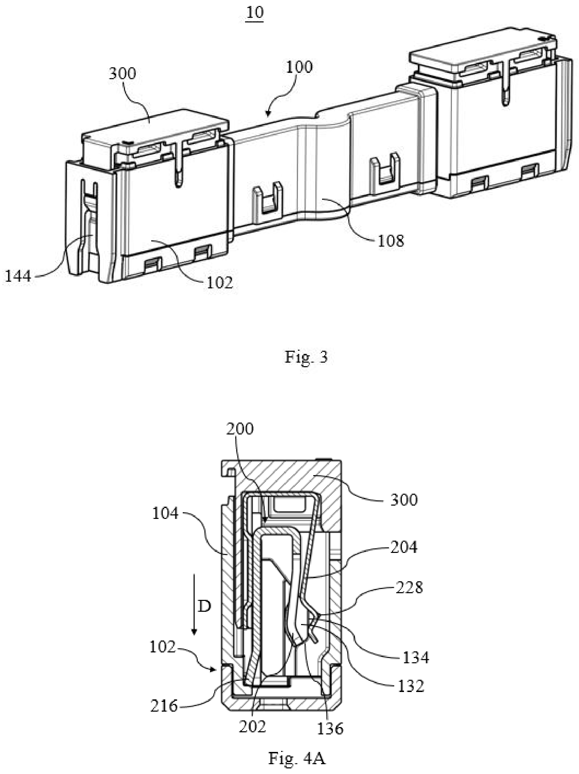

En référence aux figures 4A à 8C, dans le mode de réalisation illustré, chaque unité de serrage 200 peut inclure un dispositif de serrage par contact 202 et un dispositif de serrage élastique 204. Dans le mode de réalisation illustré, le dispositif de serrage par contact 202 peut être retenu à l'intérieur du premier composant de boîtier 102 et conçu pour serrer la borne électrique 3 afin d'être connecté électriquement à la borne électrique 3. Le dispositif de serrage élastique 204 peut être agencé sur l'extérieur du dispositif de serrage par contact 202 et conçu pour serrer le dispositif de serrage par contact 202. Le dispositif de serrage élastique 204 peut être fixé à l'organe d'actionnement 300 pour se déplacer avec l'organe d'actionnement 300. Comme le montre la figure 7C, lorsque l'organe d'actionnement 300 est dans la première position, le dispositif de serrage élastique 204 est dans un état ouvert, et le dispositif de serrage par contact 202 est libéré de la force de serrage du dispositif de serrage élastique 204. Comme le montre la figure 8C, lorsque l'organe d'actionnement 300 est dans la deuxième position, le dispositif de serrage élastique 204 est dans un état fermé, et le dispositif de serrage par contact 202 est soumis à la force de serrage du dispositif de serrage élastique 204.

Dans le mode de réalisation illustré, le dispositif de serrage par contact 202 peut présenter une structure généralement en forme de U et être élastique pour fournir une force de serrage initiale. Le dispositif de serrage par contact 202 peut inclure une première partie de contact 206 et une deuxième partie de contact 208. La première partie de contact 206 et la deuxième partie de contact 208 sont agencées l'une à l'opposé de l'autre, pour serrer la borne électrique 3 entre elles. Dans le mode de réalisation illustré, la première partie de contact 206 inclut de multiples bandes de contact, et la deuxième partie de contact 208 inclut une feuille de contact. Il peut être envisagé, dans certains autres modes de réalisation, que le dispositif de serrage par contact puisse présenter d'autres structures appropriées. Dans le mode de réalisation illustré, le dispositif de serrage par contact 202 et la barre omnibus 400 sont formés séparément et connectés l'un à l'autre, par exemple, par soudage ou rivetage. Il peut être envisagé, dans certains autres modes de réalisation non représentés, que le dispositif de serrage par contact et la barre omnibus puissent être formés d'un seul tenant. Dans le mode de réalisation illustré, chaque dispositif de serrage par contact 202 et le premier composant de boîtier 102 correspondant fournissent des structures de limitation pour limiter le déplacement du dispositif de serrage par contact 202 par rapport au premier composant de boîtier 102 dans diverses directions, retenant ainsi fermement le dispositif de serrage par contact 202 à l'intérieur du premier composant de boîtier 102. Les structures de limitation peuvent inclure, par exemple, des saillies de limitation 214, des brides de limitation 216 et des rainures de limitation 218 sur le dispositif de serrage par contact 202, et des structures correspondantes sur le premier composant de boîtier 102, comme le montrent les figures 4A à 4C. Le dispositif de serrage par contact 202 peut être constitué d'un matériau conducteur, par exemple, il peut être en cuivre ou en alliage de cuivre. Facultativement, le dispositif de serrage par contact 202 peut être en cuivre pur, de sorte que le dispositif de serrage par contact 202 présente une bonne conductivité et une force de serrage relativement faible, pour réduire l'usure de la couche de placage conductrice sur la surface de la borne électrique 3 lorsque la borne électrique 3 est insérée dans le dispositif de serrage par contact 202 et en est retirée.

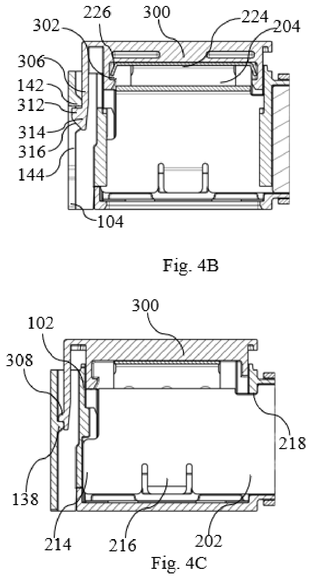

Dans le mode de réalisation illustré, le dispositif de serrage élastique 204 peut également présenter une structure généralement en forme de U. Le dispositif de serrage élastique 204 inclut une première partie de serrage 220 et une deuxième partie de serrage 222 pour serrer le dispositif de serrage par contact 202 entre elles. Le dispositif de serrage élastique 204 peut inclure une partie de base 224 connectant la première partie de serrage 220 et la deuxième partie de serrage 222. Le dispositif de serrage élastique 204 peut également inclure une paire de pattes de maintien 226 agencées symétriquement sur des côtés opposés de la partie de base 224, et de manière correspondante, l'organe d'actionnement 300 inclut une paire de rainures de maintien 302, comme le montre la figure 4B. Chaque patte de maintien 226 vient en prise avec une rainure de maintien 302 correspondante de sorte que le dispositif de serrage élastique 204 soit fixé à l'organe d'actionnement 300. Il peut être envisagé, dans certains autres modes de réalisation non représentés, que le dispositif de serrage élastique puisse être fixé à l'organe d'actionnement par le biais d'autres structures de maintien appropriées ou que le dispositif de serrage élastique puisse être formé d'un seul tenant avec l'organe d'actionnement par moulage par insertion. Le dispositif de serrage élastique 204 peut être conçu pour fournir une force de serrage plus importante. Le dispositif de serrage élastique 204 peut être constitué d'un matériau présentant, par exemple, une limite d'élasticité supérieure et une résistance à la déformation plus élevée, tel que l'acier à ressort.

Au moins l'une de la première partie de serrage 220 et de la deuxième partie de serrage 222 du dispositif de serrage élastique 204 peut inclure une partie coulissante 228. Le premier corps de boîtier 104 peut inclure une partie de guidage 132. La partie coulissante 228 est supportée par la partie de guidage 132 et peut coulisser le long de la partie de guidage 132 pour modifier la distance entre la première partie de serrage 220 et la deuxième partie de serrage 222. La distance entre la première partie de serrage 220 et la deuxième partie de serrage 222 diminue lorsque l'organe d'actionnement 300 se déplace de la première position à la deuxième position.

Dans le mode de réalisation illustré, la première partie de serrage 220 présente une forme de plaque généralement plate. La deuxième partie de serrage 222 présente une forme de plaque courbée et inclut deux parties coulissantes 228 placées sur ses côtés opposés. De manière correspondante, le premier corps de boîtier 104 inclut deux parties de guidage 132 disposées de manière opposée à l'intérieur de celui-ci. Ces deux parties de guidage 132 sont placées respectivement sur la paroi de séparation 121 et la deuxième paroi latérale 116 et font toutes deux saillie vers la chambre de réception 126 du premier corps de boîtier 104. Chaque partie coulissante 228 est supportée par la partie de guidage 132 correspondante et peut coulisser le long de la partie de guidage 132, permettant à l'organe d'actionnement 300 de se déplacer par rapport au premier corps de boîtier 104 le long de la direction de déplacement D de la première position à la deuxième position. Dans le mode de réalisation illustré, la partie de guidage 132 inclut une première surface de guidage 134 et une deuxième surface de guidage 136 adjacentes l'une à l'autre. La première surface de guidage 134 est plus proche du dessus du premier corps de boîtier 104 que la deuxième surface de guidage 136. La première surface de guidage 134 est parallèle à la direction de déplacement D de l'organe d'actionnement 300. La deuxième surface de guidage 136 est inclinée par rapport à la direction de déplacement D de l'organe d'actionnement 300. La partie coulissante 228 vient en butée contre la première surface de guidage 134 lorsque l'organe d'actionnement 300 est dans la première position, comme le montre la figure 7C. La partie coulissante 228 vient en butée contre la deuxième surface de guidage 136 lorsque l'organe d'actionnement 300 est dans la deuxième position, comme le montre la figure 8C. Lorsque la partie coulissante 228 coulisse de la première surface de guidage 134 à la deuxième surface de guidage 136, la distance entre la première partie de serrage 220 et la deuxième partie de serrage 222 du dispositif de serrage élastique 204 diminue. Il peut être envisagé, dans certains autres modes de réalisation, que la partie coulissante puisse être placée sur la première partie de serrage, ou que des parties coulissantes puissent être placées à la fois sur la première partie de serrage et sur la deuxième partie de serrage.

Comme le montre la figure 7C, lorsque l'organe d'actionnement 300 est dans la première position, la première partie de serrage 220 du dispositif de serrage élastique 204 entre en contact avec la première partie de contact 206 du dispositif de serrage par contact 202, la deuxième partie de serrage 222 du dispositif de serrage élastique 204 est supportée sur la partie de guidage 132 par le biais de la partie coulissante 228 et n'entre sensiblement pas en contact avec la deuxième partie de contact 208 du dispositif de serrage par contact 202, le dispositif de serrage élastique 204 n'applique pas de force de chargement/force de serrage à ce stade sur le dispositif de serrage par contact 202, l'unité de serrage 200 est à l'état initial et peut serrer la borne électrique 3 avec une force de serrage initiale plus faible fournie par le dispositif de serrage par contact 202. Comme le montre la figure 8C, lorsque l'organe d'actionnement 300 se déplace vers la deuxième position, la deuxième partie de serrage 222 du dispositif de serrage élastique 204 appuie contre la deuxième partie de contact 208 du dispositif de serrage par contact 202, pour appliquer une force de chargement/force de serrage au dispositif de serrage par contact 202, à ce stade, l'unité de serrage 200 est à l'état de fonctionnement et peut serrer la borne électrique 3 avec une force de serrage de fonctionnement plus importante fournie conjointement par le dispositif de serrage par contact 202 et le dispositif de serrage élastique 204, pour obtenir une connexion sûre entre l'unité de serrage 200 et la borne électrique 3. Le dispositif de serrage par contact 202 de l'unité de serrage 200 peut fournir une bonne conductivité, tandis que le dispositif de serrage élastique 204 peut fournir une force de serrage accrue, permettant ainsi à l'unité de serrage 200 d'être connectée de manière fiable à la borne électrique 3 avec une faible résistance de contact.

En référence aux figures 4A à 8C, dans le mode de réalisation illustré, l'organe d'actionnement 300 peut inclure un corps principal 304 et un porte-à-faux 306 s'étendant à partir du corps principal 304. Dans le mode de réalisation illustré, le porte-à-faux 306 s'étend généralement le long de la direction de déplacement D de l'organe d'actionnement 300 et se présente sous la forme d'une bande plate. Le corps principal 304 est logé de manière mobile dans la chambre de réception 126, et le porte-à-faux 306 est logé de manière mobile dans le canal de réception 122.

Dans le mode de réalisation illustré, le boîtier 100 peut inclure une première partie de limitation 138. La première partie de limitation 138 peut se présenter sous la forme d'une saillie et être placée sur la première paroi latérale 114 du premier corps de boîtier 104. Le porte-à-faux 306 de l'organe d'actionnement 300 peut inclure une deuxième partie de limitation 308. La deuxième partie de limitation 308 peut être placée à l'extrémité libre du porte-à-faux 306. La deuxième partie de limitation 308 peut se présenter sous la forme d'une saillie et faire saillie vers la première paroi latérale 114. Comme le montre la figure 4C, lorsque l'organe d'actionnement 300 est dans la première position, la première partie de limitation 138 peut venir en butée contre la deuxième partie de limitation 308/interférer mécaniquement avec la deuxième partie de limitation 308, pour empêcher l'organe d'actionnement 300 de se déplacer vers la deuxième position. Dans le mode de réalisation illustré, la première partie de limitation 138 et la deuxième partie de limitation 308 incluent respectivement une première surface de limitation 140 et une deuxième surface de limitation 310. Lorsque l'organe d'actionnement 300 est dans la première position, la première surface de limitation 140 peut venir en butée contre la deuxième surface de limitation 310, pour empêcher l'organe d'actionnement 300 de se déplacer vers la deuxième position. La première surface de limitation 140 et la deuxième surface de limitation 310 peuvent être perpendiculaires à la direction de déplacement D de l'organe d'actionnement 300, pour mieux empêcher l'organe d'actionnement 300 de se déplacer vers la deuxième position. Dans le mode de réalisation illustré, le porte-à-faux 306 peut inclure deux deuxièmes parties de limitation 308, et de manière correspondante, le premier corps de boîtier 104 peut inclure deux premières parties de limitation 138. Il peut être envisagé, dans certains autres modes de réalisation non représentés, que la première partie de limitation et la deuxième partie de limitation puissent également présenter d'autres structures appropriées, par exemple, l'une de la première partie de limitation et de la deuxième partie de limitation peut se présenter sous la forme d'une saillie, tandis que l'autre peut se présenter sous la forme d'une encoche ; dans certains autres modes de réalisation non représentés, d'autres nombres appropriés de premières parties de limitation et de deuxièmes parties de limitation peuvent être prévus.

Dans le mode de réalisation illustré, le boîtier 100 peut inclure une première partie de maintien 142. La première partie de maintien 142 peut se présenter sous la forme d'une saillie et être placée sur le bras de maintien 141 de la première paroi latérale 114 du premier corps de boîtier 104. Le porte-à-faux 306 de l'organe d'actionnement 300 peut inclure une deuxième partie de maintien 312. La deuxième partie de maintien 312 peut être placée à l'extrémité libre du porte-à-faux 306. La deuxième partie de maintien 312 peut se présenter sous la forme d'une saillie et faire saillie vers la première paroi latérale 114. Comme le montre la figure 4B, lorsque l'organe d'actionnement 300 est dans la première position, la première partie de maintien 142 peut venir en butée contre la deuxième partie de maintien 312/interférer mécaniquement avec la deuxième partie de maintien 312, pour empêcher l'organe d'actionnement 300 de se déplacer dans la direction opposée à la direction de déplacement D et de se détacher du premier composant de boîtier 102. Dans le mode de réalisation illustré, la première partie de maintien 142 et la deuxième partie de maintien 312 peuvent être en contact de surface l'une avec l'autre, et la surface de contact entre la première partie de maintien 142 et la deuxième partie de maintien 312 peut être généralement perpendiculaire à la direction de déplacement D de l'organe d'actionnement 300, pour mieux empêcher l'organe d'actionnement 300 de se déplacer dans la direction opposée à la direction de déplacement D et de se détacher du premier composant de boîtier 102. Il peut être envisagé, dans certains autres modes de réalisation non représentés, que la deuxième partie de maintien puisse également ne pas être placée sur le porte-à-faux de l'organe d'actionnement, mais puisse être placée sur le corps principal de l'organe d'actionnement.

Dans le mode de réalisation illustré, le porte-à-faux 306 de l'organe d'actionnement 300 peut également inclure une partie d'ajustement/partie d'appui 314. La partie d'ajustement 314 peut déformer élastiquement/dévier le porte-à-faux 306 dans une direction éloignée de la première partie de limitation 138, ou, autrement dit, le déformer élastiquement/dévier à l'écart de la première paroi latérale 114 vers la paroi de séparation 121, en raison d'un contact par pression avec la partie d'activation 21 du siège de montage 20 pendant le processus d'insertion du connecteur électrique 10 dans le siège de montage 20. Lorsque le connecteur électrique 10 (plus précisément, le premier composant de boîtier 102) est complètement inséré dans le siège de montage 20, la déformation élastique/déviation du porte-à-faux 306 provoque la libération de la deuxième partie de limitation 308 du porte-à-faux 306 et de la première partie de limitation 138 du premier composant de boîtier 102, libérant ainsi l'organe d'actionnement 300 de toute interférence mécanique avec le premier composant de boîtier 102 pour permettre à l'organe d'actionnement 300 de se déplacer vers la deuxième position. Dans le mode de réalisation illustré, la partie d'ajustement 314 et la partie d'activation 21 se présentent toutes deux sous la forme de saillies. Dans le mode de réalisation illustré, la partie d'ajustement 314 peut inclure une pente 316 (voir figure 4B) inclinée par rapport à la direction d'insertion I du connecteur électrique 10 dans le siège de montage 20, pour guider la déformation élastique du porte-à-faux 306 dans une direction éloignée de la première partie de limitation 138 pendant le processus d'insertion du connecteur électrique 10 dans le siège de montage 20. Il peut être envisagé, dans certains autres modes de réalisation non représentés, qu'une pente puisse être prévue sur la partie d'activation du siège de montage, ou que des pentes puissent être prévues à la fois sur la partie d'activation du siège de montage et sur la partie d'ajustement du porte-à-faux. Dans le mode de réalisation illustré, la partie d'ajustement 314 et la deuxième partie de limitation 308 peuvent être adjacentes l'une à l'autre dans la direction de largeur du porte-à-faux 306. Dans le mode de réalisation illustré, la partie d'ajustement 314 peut être située sous la deuxième partie de maintien 312.

Dans le mode de réalisation illustré, la première paroi latérale 114 du premier corps de boîtier 104 peut également inclure une fenêtre 144, comme le montrent les figures 4B et 7A. La fenêtre 144 peut s'étendre le long de la direction de déplacement D de l'organe d'actionnement 300 et présenter une extrémité inférieure ouverte. La partie d'ajustement 314 de l'organe d'actionnement 300 peut s'étendre dans la fenêtre 144. Pendant le processus d'insertion du connecteur électrique 10 dans le siège de montage 20, la partie d'activation 21 du siège de montage 20 peut également s'étendre dans la fenêtre 144 pour entrer en contact par pression avec (autrement dit, pour appuyer contre) la partie d'ajustement 314 de l'organe d'actionnement 300, provoquant ainsi la déformation élastique/déviation du porte-à-faux 306. La première partie de maintien 142 du premier corps de boîtier 104 peut être placée au sommet de la fenêtre 144.

Dans le mode de réalisation illustré, le premier corps de boîtier 104 du boîtier 100 peut inclure une rainure de guidage 146 s'étendant le long de la direction de déplacement D de l'organe d'actionnement 300 (voir figure 6B). Le corps principal 304 de l'organe d'actionnement 300 peut inclure une nervure de guidage 318 s'étendant le long de la direction de déplacement D de l'organe d'actionnement 300 (voir figure 6A). Lorsque l'organe d'actionnement 300 se déplace de la première position à la deuxième position, la nervure de guidage 318 entre dans la rainure de guidage 146 pour guider le déplacement de l'organe d'actionnement 300 le long de la direction de déplacement D. Lorsque l'organe d'actionnement 300 se déplace vers la deuxième position, l'extrémité inférieure de la nervure de guidage 318 vient en butée contre l'extrémité inférieure de la rainure de guidage 146, pour empêcher l'organe d'actionnement 300 de se déplacer davantage le long de la direction de déplacement D.

Dans le mode de réalisation illustré, le siège de montage 20 peut également inclure une partie d'évitement 23. La partie d'évitement 23 peut se présenter sous la forme d'une ouverture. La partie d'évitement 23 et la partie d'activation 21 du siège de montage 20 peuvent être adjacentes l'une à l'autre dans la direction d'insertion I du connecteur électrique 10, qui est également la direction de déplacement D de l'organe d'actionnement 300. Lorsque l'organe d'actionnement 300 se déplace vers la deuxième position, le porte-à-faux 306 de l'organe d'actionnement 300 retrouve sa forme sous l'effet de la force de rappel élastique, permettant à la partie d'ajustement 314 et à la deuxième partie de maintien 312 de l'organe d'actionnement 300 d'entrer dans la partie d'évitement 23, permettant ainsi au porte-à-faux 306 de revenir à son état initial sans contrainte. Dans le même temps, le bord supérieur de la partie d'évitement 23 et la deuxième partie de maintien 312 peuvent interférer mécaniquement l'un avec l'autre/venir en butée l'un contre l'autre pour empêcher l'organe d'actionnement 300 de se déplacer depuis la deuxième position vers la première position.

Dans le mode de réalisation illustré, le corps principal 304 de l'organe d'actionnement 300 peut également inclure une rainure de réception 320, pour venir en prise avec un outil (par exemple, un tournevis) afin de retirer le connecteur électrique 10 du siège de montage 20.

Le processus de connexion et de déconnexion du connecteur électrique 10 de l'ensemble connecteur électrique 1 selon le premier mode de réalisation à/de la borne électrique 3 va maintenant être décrit en référence aux figures 1 à 8C.

Comme le montrent la figure 1 et les figures 4A à 4C, avant que le connecteur électrique 10 ne soit inséré dans le siège de montage 20, l'organe d'actionnement 300 du connecteur électrique 10 est dans la première position. À ce stade, la première partie de limitation 138 du boîtier 100 vient en butée contre la deuxième partie de limitation 308 de l'organe d'actionnement 300 pour empêcher l'organe d'actionnement 300 de se déplacer vers la deuxième position, l'unité de serrage 200 est à l'état initial, et le dispositif de serrage par contact 202 est libéré de la force de serrage du dispositif de serrage élastique 204.

Comme le montrent les figures 7A à 7C, à mesure que le connecteur électrique 10 est inséré progressivement dans le siège de montage 20 (par exemple, par pression sur l'organe d'actionnement 300 pour insérer le premier composant de boîtier 102 dans le siège de montage 20), la partie d'activation 21 du siège de montage 20 peut entrer en contact par pression avec la partie d'ajustement 314 de l'organe d'actionnement 300 et guider le porte-à-faux 306 de l'organe d'actionnement 300 pour le dévier dans une direction éloignée de la première partie de limitation 138 du boîtier 100, amenant la deuxième partie de limitation 308 de l'organe d'actionnement 300 à s'éloigner progressivement de la première partie de limitation 138 du premier composant de boîtier 102, tandis que la borne électrique 3 peut être insérée dans le dispositif de serrage par contact 202 avec moins de résistance et est soumise à une force de serrage initiale plus faible fournie par le dispositif de serrage par contact 202.

Lorsque le connecteur électrique 10 est complètement inséré dans le siège de montage 20, la borne électrique 3 est complètement insérée dans le dispositif de serrage par contact 202, et la première partie de limitation 138 du premier composant de boîtier 102 et la deuxième partie de limitation 308 de l'organe d'actionnement 300 sont décalées l'une par rapport à l'autre, ce qui permet à l'organe d'actionnement 300 d'être pressé vers le bas pour se déplacer vers la deuxième position.

Comme le montrent les figures 8A à 8C, lorsque le connecteur électrique 10 est complètement inséré dans le siège de montage 20 et que l'organe d'actionnement 300 se déplace vers la deuxième position, l'unité de serrage 200 est à l'état de fonctionnement, le dispositif de serrage par contact 202 est soumis à la force de serrage du dispositif de serrage élastique 204, ce qui amène la borne électrique 3 à être soumise à une force de serrage de fonctionnement plus importante fournie conjointement par le dispositif de serrage par contact 202 et le dispositif de serrage élastique 204. Dans le même temps, la deuxième partie de maintien 312 de l'organe d'actionnement 300 interfère mécaniquement avec le bord supérieur de la partie d'évitement 23 du siège de montage 20 pour empêcher l'organe d'actionnement 300 de se déplacer depuis la deuxième position vers la première position et de se détacher du premier composant de boîtier 102, permettant ainsi au connecteur électrique 10 d'être connecté mécaniquement et électriquement de manière fiable à la borne électrique 3.

En référence aux figures 4A à 4C et aux figures 7A à 8C, lors du démontage du connecteur électrique 10 du siège de montage 20, un outil peut être inséré dans la partie d'évitement 23 du siège de montage 20 pour amener le porte-à-faux 306 à dévier dans une direction éloignée de la partie d'évitement 23, libérant ainsi l'interférence mécanique entre le bord supérieur de la partie d'évitement 23 du siège de montage 20 et la deuxième partie de maintien 312 de l'organe d'actionnement 300, pour permettre à l'organe d'actionnement 300 de se déplacer vers la première position par rapport au premier composant de boîtier 102. Dans le même temps, un autre outil peut être inséré dans la rainure de réception 320 de l'organe d'actionnement 300 pour appliquer une force vers le haut à l'organe d'actionnement 300, provoquant son déplacement vers le haut vers la première position. Lorsque l'organe d'actionnement 300 se déplace vers la première position par rapport au premier composant de boîtier 102, la deuxième partie de maintien 312 de l'organe d'actionnement 300 peut venir en butée contre la première partie de maintien 142 du premier composant de boîtier 102, tandis que l'unité de serrage 200 peut passer à l'état initial. Ensuite, en continuant à appliquer une force vers le haut à l'organe d'actionnement 300, l'organe d'actionnement 300 se déplace conjointement avec le premier composant de boîtier 102, ce qui permet de retirer facilement le connecteur électrique 10 du siège de montage 20 et de retirer la borne électrique 3 de l'unité de serrage 200.

Étant donné que la résistance de l'unité de serrage 200 est relativement faible lorsque la borne électrique 3 est insérée dans l'unité de serrage 200 et retirée de celle-ci, elle permet de connecter le connecteur électrique 10 à la borne électrique 3 et de le déconnecter de celle-ci plusieurs fois sans endommager facilement la couche de placage conductrice sur la surface de la borne électrique 3.

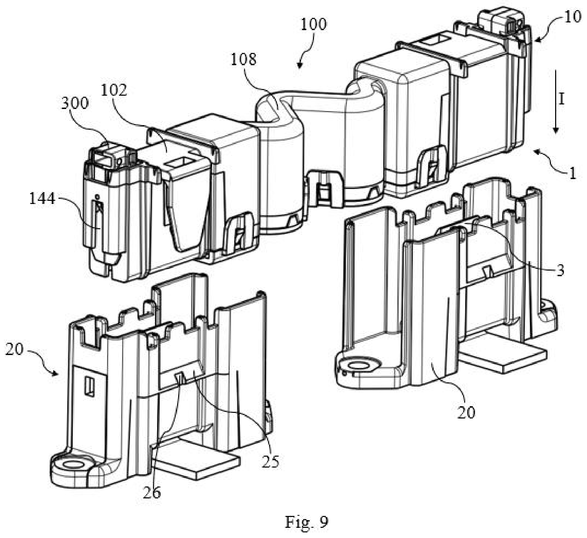

Les figures 9 à 19C représentent l'ensemble connecteur électrique et ses composants selon le deuxième mode de réalisation de la présente invention. L'ensemble connecteur électrique selon le deuxième mode de réalisation est similaire à l'ensemble connecteur électrique selon le premier mode de réalisation en ce qui concerne l'interaction entre l'organe d'actionnement 300 et le boîtier 100 et le siège de montage 20. La principale différence entre les deux réside dans l'interaction entre l'organe d'actionnement 300 et l'unité de serrage 200. Ce qui suit présentera principalement les différences entre les deux modes de réalisation, tandis que les similitudes ne seront pas décrites ou ne le seront que brièvement.

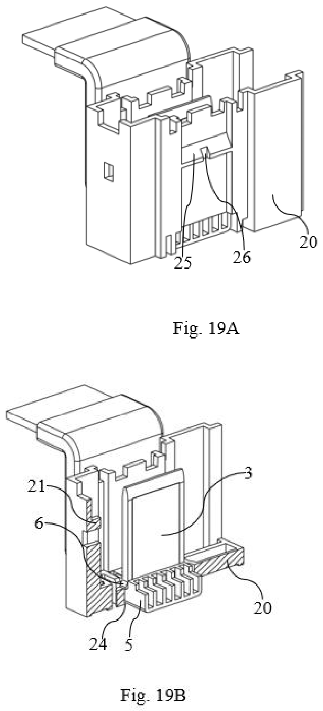

En référence à la figure 9, à la figure 19A et à la figure 19B, l'ensemble connecteur électrique 1 peut inclure un connecteur électrique 10 et un siège de montage 20. Le siège de montage 20 peut être placé pour entourer la borne électrique 3. Le siège de montage 20 peut présenter une structure creuse et peut inclure une partie d'activation 21 à l'intérieur de celui-ci. Le connecteur électrique 10 est adapté pour être inséré dans le siège de montage 20 afin d'être connecté électriquement à la borne électrique 3. Le siège de montage 20 peut être formé séparément et fixé à la plaque d'extrémité de module ou à une autre structure de support, par exemple par soudage, encliquetage ou boulonnage. Dans le mode de réalisation illustré, un cadre de montage 5 entourant la borne électrique 3 peut être formé à l'extérieur de la borne électrique 3 par moulage par injection (par exemple, par moulage par insertion). Le cadre de montage 5 peut inclure une saillie de verrouillage 6 pour venir en prise avec l'ouverture de verrouillage 24 du siège de montage 20, fixant ainsi la borne électrique 3 au siège de montage 20.

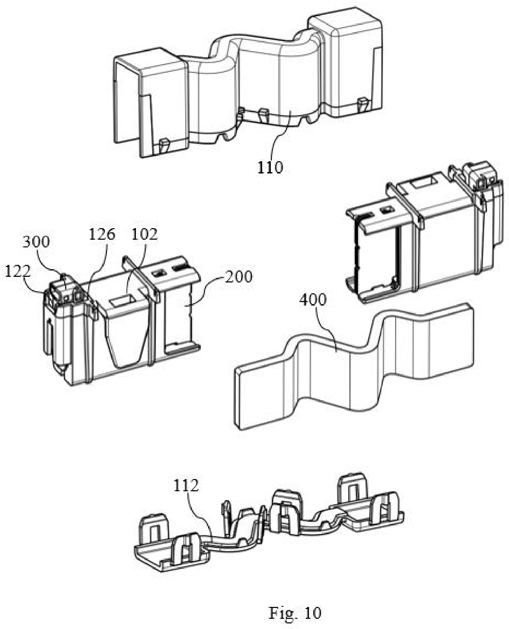

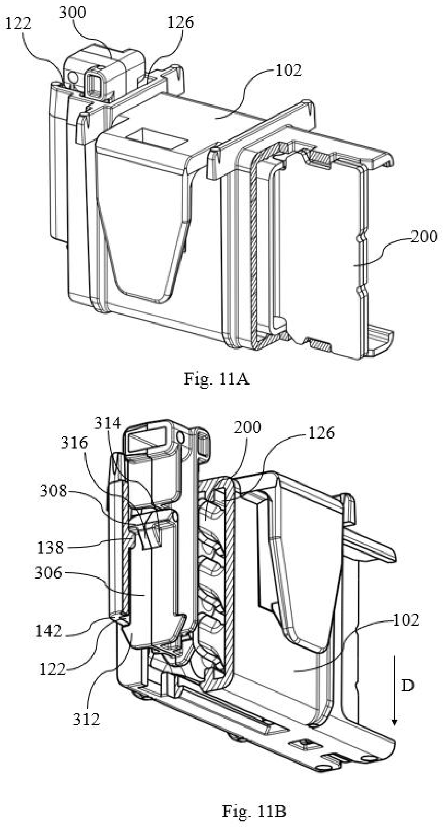

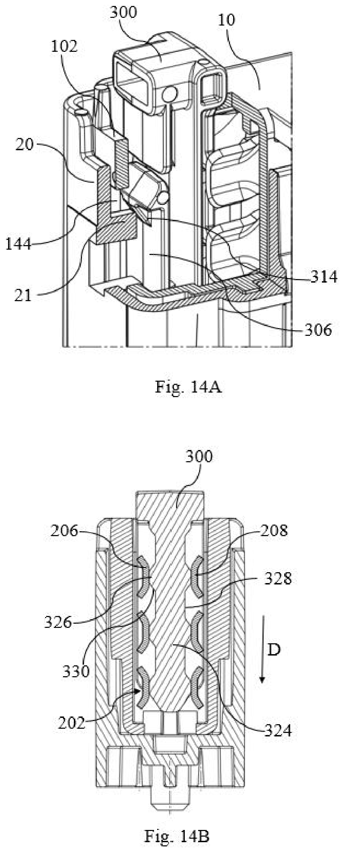

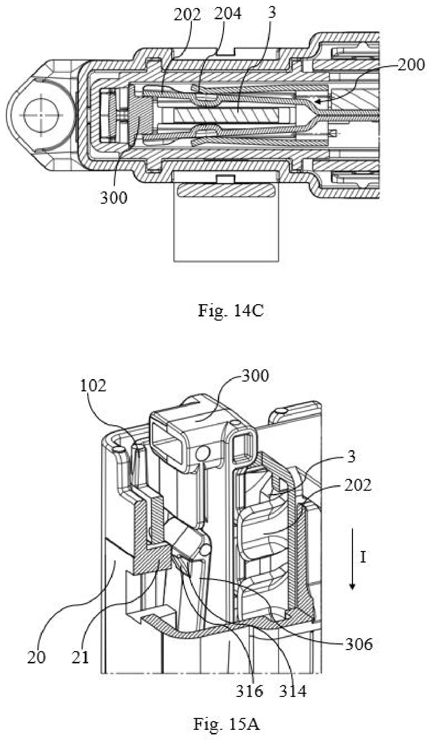

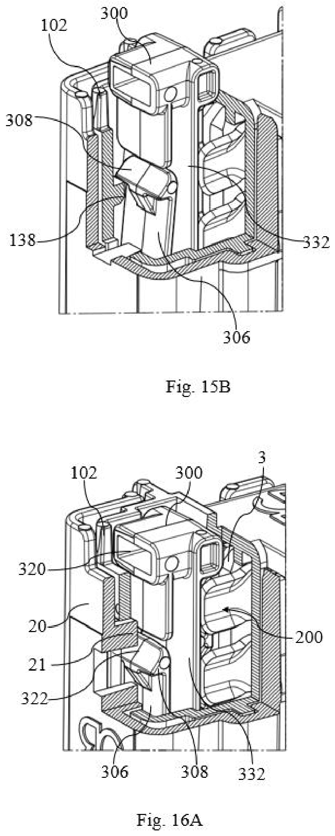

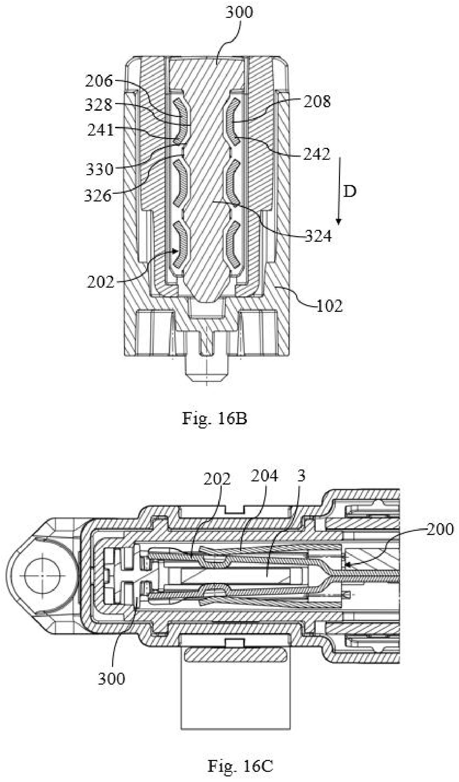

En référence à la figure 9, à la figure 10 et aux figures 14A à 16C, le connecteur électrique 10 peut inclure un boîtier 100, une unité de serrage 200 et un organe d'actionnement 300. L'unité de serrage 200 est disposée au moins partiellement à l'intérieur du boîtier 100 et est conçue pour serrer la borne électrique 3 afin d'être connectée électriquement à la borne électrique 3. L'organe d'actionnement 300 est apte à se déplacer par rapport au boîtier 100 entre une première position représentée sur les figures 11A, 11B et 14A à 15B et une deuxième position représentée sur les figures 16A à 16C, et est associé de manière fonctionnelle à l'unité de serrage 200. L'unité de serrage 200 est apte à basculer entre un état initial représenté sur les figures 14B et 14C et un état de fonctionnement représenté sur les figures 16B et 16C. À l'état initial, l'unité de serrage 200 est adaptée pour être libérée de la borne électrique 3 ou être seulement légèrement en contact avec celle-ci, sans appliquer ou presque de force de serrage sur la borne électrique 3, et à l'état de fonctionnement, elle est adaptée pour serrer la borne électrique 3 avec une force de serrage de fonctionnement. L'organe d'actionnement 300 est adapté pour être dans la première position avant que le connecteur électrique 10 ne soit inséré dans le siège de montage 20 et n'interfère mécaniquement avec le boîtier 100 pour empêcher l'organe d'actionnement 300 de se déplacer vers la deuxième position. L'organe d'actionnement 300 est adapté pour se déformer, de préférence élastiquement, en raison d'un contact par pression avec la partie d'activation 21 pendant le processus d'insertion du connecteur électrique 10 dans le siège de montage 20, de sorte que, lorsque le connecteur électrique 10 est complètement inséré dans le siège de montage 20 (c'est-à-dire lorsque la borne électrique 3 est complètement insérée dans l'unité de serrage 200), l'organe d'actionnement 300 se libère de toute interférence mécanique avec le boîtier 100 pour permettre à l'organe d'actionnement 300 de se déplacer vers la deuxième position. L'unité de serrage 200 passe de l'état initial à l'état de fonctionnement en réponse au déplacement de l'organe d'actionnement 300 de la première position à la deuxième position le long de la direction de déplacement D.

Dans le mode de réalisation illustré, la direction de déplacement D de l'organe d'actionnement 300 de la première position à la deuxième position peut être dans la même direction que la direction d'insertion I du connecteur électrique 10 dans le siège de montage 20. La direction de déplacement D et la direction d'insertion I peuvent toutes deux être verticalement vers le bas.

En référence aux figures 10 à 13B, dans le mode de réalisation illustré, l'ensemble connecteur électrique 1 peut inclure deux sièges de montage 20. Le connecteur électrique 10 peut inclure deux unités de serrage 200 et deux organes d'actionnement 300. Chaque organe d'actionnement 300 peut être associé de manière fonctionnelle à une unité de serrage 200 correspondante. Le connecteur électrique 10 peut également inclure un conducteur 400. Le conducteur 400 peut être une barre omnibus. La barre omnibus 400 et les parties des unités de serrage 200 qui entrent en contact avec les bornes électriques 3 peuvent être constituées d'un matériau conducteur. Les deux extrémités de la barre omnibus 400 peuvent être connectées mécaniquement et électriquement aux deux unités de serrage 200 respectivement. Chaque unité de serrage 200 peut serrer une borne électrique 3 correspondante. Il peut être envisagé, dans certains autres modes de réalisation, que le conducteur puisse être un câble, un conducteur tressé ou un autre conducteur approprié.

Dans le mode de réalisation illustré, le boîtier 100 peut inclure deux premiers composants de boîtier 102. Chaque premier composant de boîtier 102 peut loger une unité de serrage 200 correspondante. Chaque organe d'actionnement 300 peut être monté sur un premier composant de boîtier 102 correspondant. Dans le mode de réalisation illustré, chaque premier composant de boîtier 102 peut présenter une forme généralement de type boîte et inclure un canal de réception 122 et une chambre de réception 126 qui communiquent entre eux. Le canal de réception 122 peut recevoir une partie de l'organe d'actionnement 300. La chambre de réception 126 peut loger une autre partie de l'organe d'actionnement 300 et l'unité de serrage 200. Chaque premier composant de boîtier 102 est adapté pour être inséré dans un siège de montage 20 correspondant. Le siège de montage 20 peut présenter une forme correspondant au premier composant de boîtier 102. Dans le mode de réalisation illustré, le boîtier 100 peut également inclure un deuxième composant de boîtier 108. Le deuxième composant de boîtier 108 peut loger la barre omnibus 400. Le deuxième composant de boîtier 108 peut inclure un deuxième corps de boîtier 110 et un deuxième couvercle inférieur 112. Le deuxième couvercle inférieur 112 peut être connecté de manière détachable au deuxième corps de boîtier 110, par exemple, par encliquetage. Le boîtier 100 et l'organe d'actionnement 300 peuvent être en plastique.

Dans le mode de réalisation illustré, le connecteur électrique 10 présente une structure symétrique. Par souci de clarté et de concision dans la description suivante, nous allons principalement décrire l'un des deux premiers composants de boîtier 102 du connecteur électrique 10 et l'organe d'actionnement 300, l'unité de serrage 200 et le siège de montage 20 correspondants.

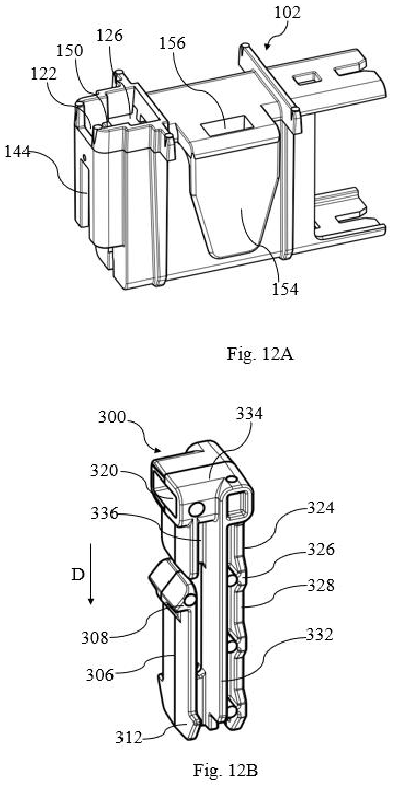

En référence aux figures 12B à 16C, dans le mode de réalisation illustré, chaque unité de serrage 200 peut inclure un dispositif de serrage par contact 202 et un dispositif de serrage élastique 204. Le dispositif de serrage par contact 202 est retenu à l'intérieur du premier composant de boîtier 102 et conçu pour serrer la borne électrique 3. Le dispositif de serrage élastique 204 est agencé sur l'extérieur du dispositif de serrage par contact 202 et conçu pour serrer le dispositif de serrage par contact 202. L'organe d'actionnement 300 est disposé au moins partiellement à l'intérieur du dispositif de serrage par contact 202 et conçu pour faire passer le dispositif de serrage par contact 202 de l'état ouvert représenté sur les figures 14B et 14C à l'état fermé représenté sur les figures 16B et 16C de manière correspondante lors du déplacement de la première position représentée sur les figures 14A à 15B à la deuxième position représentée sur les figures 16A à 16C. Le dispositif de serrage élastique 204 passe de l'état ouvert représenté sur la figure 14C à l'état fermé représenté sur la figure 16C de manière correspondante lorsque le dispositif de serrage par contact 202 passe de l'état ouvert à l'état fermé.

Dans le mode de réalisation illustré, le dispositif de serrage par contact 202 peut présenter une structure symétrique. Le dispositif de serrage par contact 202 peut inclure une première partie de contact 206 et une deuxième partie de contact 208. La première partie de contact 206 et la deuxième partie de contact 208 sont agencées l'une à l'opposé de l'autre, pour serrer la borne électrique 3 entre elles. Le dispositif de serrage par contact 202 et la barre omnibus 400 peuvent être formés séparément et connectés l'une à l'autre, par exemple par soudage. Chaque dispositif de serrage par contact 202 et le premier composant de boîtier 102 correspondant fournissent des structures de limitation pour limiter le déplacement du dispositif de serrage par contact 202 par rapport au premier composant de boîtier 102, retenant ainsi fermement le dispositif de serrage par contact 202 à l'intérieur du premier composant de boîtier 102. Les structures de limitation peuvent inclure, par exemple, des saillies de limitation 230 et des encoches de limitation 232 sur le dispositif de serrage par contact 202 et des structures correspondantes sur le premier composant de boîtier 102. Le dispositif de serrage par contact 202 peut être constitué d'un matériau conducteur, par exemple, il peut être en cuivre ou en alliage de cuivre. Facultativement, le dispositif de serrage par contact 202 peut être en cuivre pur, de sorte que le dispositif de serrage par contact 202 présente une bonne conductivité et une force de serrage relativement faible, pour réduire l'usure de la couche de placage conductrice sur la surface de la borne électrique 3 lorsque la borne électrique 3 est insérée dans le dispositif de serrage par contact 202 et en est retirée.

Dans le mode de réalisation illustré, le dispositif de serrage élastique 204 peut présenter une structure symétrique. Le dispositif de serrage élastique 204 peut inclure une première partie de serrage 220 et une deuxième partie de serrage 222. La première partie de serrage 220 et la deuxième partie de serrage 222 sont agencées l'une à l'opposé de l'autre, pour serrer la mâchoire de contact 202 entre elles. La première partie de serrage 220 et la deuxième partie de serrage 222 peuvent appuyer respectivement contre la première partie de contact 206 et la deuxième partie de contact 208. Le dispositif de serrage élastique 204 peut être conçu pour fournir une force de serrage plus importante. Le dispositif de serrage élastique 204 peut être constitué d'un matériau présentant, par exemple, une limite d'élasticité supérieure et une résistance à la déformation plus élevée, tel que l'acier à ressort.

Dans le mode de réalisation illustré, l'organe d'actionnement 300 peut inclure une partie d'espacement 324. La partie d'espacement 324 est disposée entre la première partie de contact 206 et la deuxième partie de contact 208. La première partie de contact 206 et la deuxième partie de contact 208 sont en contact par pression avec la partie d'espacement 324 lorsque l'organe d'actionnement 300 est dans la première position pour ouvrir le dispositif de serrage par contact 202. La première partie de contact 206 et la deuxième partie de contact 208 se libèrent de tout contact avec la partie d'espacement 324 lorsque l'organe d'actionnement 300 se déplace vers la deuxième position, permettant au dispositif de serrage par contact 202 de se fermer sous l'effet de sa force de rappel élastique.

Dans le mode de réalisation illustré, la partie d'espacement 324 peut s'étendre généralement le long de la direction de déplacement D de l'organe d'actionnement 300. La partie d'espacement 324 peut inclure une section d'expansion 326 et une section de contraction 328 adjacentes l'une à l'autre dans la direction de déplacement D de l'organe d'actionnement 300. Dans le mode de réalisation illustré, la section d'expansion 326 présente une largeur constante. La section de contraction 328 présente un contour extérieur concave et possède ainsi une largeur variable. La largeur de la section d'expansion 326 est supérieure à la largeur minimale de la section de contraction 328. La partie de la section de contraction 328 adjacente à la section d'expansion 326 présente une surface en pente 330 qui est inclinée par rapport à la direction de déplacement D de l'organe d'actionnement 300.

Comme le montrent les figures 14B et 14C, lorsque l'organe d'actionnement 300 est dans la première position, la première partie de contact 206 et la deuxième partie de contact 208 sont alignées avec et en contact par pression avec la section d'expansion 326. À ce stade, la première partie de contact 206 et la deuxième partie de contact 208 peuvent se déformer élastiquement/dévier vers l'extérieur du dispositif de serrage par contact 202, amenant le dispositif de serrage par contact 202 à passer à un état ouvert. Lorsque le dispositif de serrage par contact 202 est à l'état ouvert, la distance entre la première partie de contact 206 et la deuxième partie de contact 208 peut être supérieure ou sensiblement égale à l'épaisseur de la borne électrique 3, ce qui permet d'insérer la borne électrique 3 dans le dispositif de serrage par contact 202 ou de l'en retirer sans la soumettre ou presque à la force de serrage fournie par le dispositif de serrage par contact 202 et le dispositif de serrage élastique 204, réduisant ainsi l'usure de la couche de placage conductrice sur la surface de la borne électrique 3.

Comme le montrent les figures 16A à 16C, lorsque l'organe d'actionnement 300 se déplace vers la deuxième position, la première partie de contact 206 et la deuxième partie de contact 208 sont alignées avec la section de contraction 328. À ce stade, la première partie de contact 206 et la deuxième partie de contact 208 peuvent récupérer leur déformation sous l'effet de leur propre force de rappel élastique et de la force de serrage du dispositif de serrage élastique 204, amenant le dispositif de serrage par contact 202 à l'état fermé, soumettant la borne électrique 3 à la force de serrage de fonctionnement fournie par le dispositif de serrage par contact 202 et le dispositif de serrage élastique 204, pour ainsi obtenir une connexion sûre entre l'unité de serrage 200 et la borne électrique 3. À ce stade, la borne électrique 3 est interposée entre la première partie de contact 206 et la deuxième partie de contact 208, la première partie de contact 206 et la deuxième partie de contact 208 peuvent être espacées de la section de contraction 328.

Le dispositif de serrage par contact 202 de l'unité de serrage 200 peut fournir une bonne conductivité, tandis que le dispositif de serrage élastique 204 peut fournir une force de serrage accrue, permettant ainsi à l'unité de serrage 200 d'être connectée de manière fiable à la borne électrique 3 avec une faible résistance de contact. Il peut être envisagé, dans certains autres modes de réalisation non représentés, si le dispositif de serrage par contact lui-même présente une bonne conductivité et peut fournir une force de serrage suffisante, que l'unité de serrage puisse uniquement inclure le dispositif de serrage par contact sans inclure le dispositif de serrage élastique.

Dans le mode de réalisation illustré, la première partie de contact 206 et la deuxième partie de contact 208 du dispositif de serrage par contact 202 peuvent inclure respectivement de multiples premières parties en forme de doigt 234 et de multiples deuxièmes parties en forme de doigt 236. La première partie de serrage 220 et la deuxième partie de serrage 222 du dispositif de serrage élastique 204 peuvent inclure respectivement de multiples troisièmes parties en forme de doigt 238 et de multiples quatrièmes parties en forme de doigt 240. Chaque troisième partie en forme de doigt 238 est adaptée pour appuyer contre une première partie en forme de doigt 234 correspondante. Chaque quatrième partie en forme de doigt 240 est adaptée pour appuyer contre une deuxième partie en forme de doigt 236 correspondante. La partie d'espacement 324 peut inclure de multiples sections d'expansion 326 et de multiples sections de contraction 328 agencées en alternance.

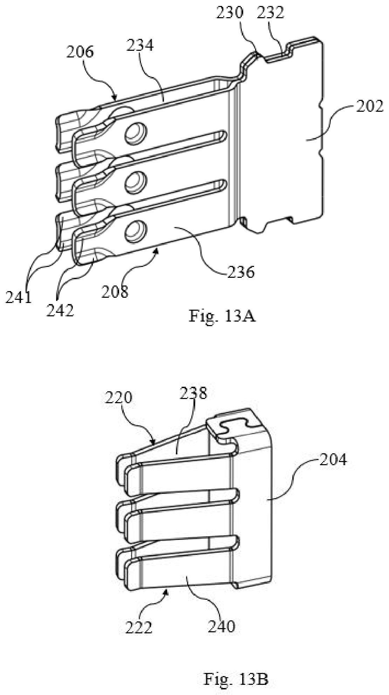

En référence à la figure 13A et à la figure 14B, lorsque l'organe d'actionnement 300 est dans la première position, l'extrémité libre de chaque première partie en forme de doigt 234 et l'extrémité libre de la deuxième partie en forme de doigt 236 correspondante sont alignées avec et en contact par pression avec la section d'expansion 326 correspondante, amenant le dispositif de serrage par contact 202 à passer à un état ouvert. En référence à la figure 13A et à la figure 16B, lorsque l'organe d'actionnement 300 se déplace vers la deuxième position, l'extrémité libre de chaque première partie en forme de doigt 234 et l'extrémité libre de la deuxième partie en forme de doigt 236 correspondante sont alignées avec la section de contraction 328 correspondante et espacées de celle-ci, amenant le dispositif de serrage par contact 202 à passer à un état fermé.

Dans le mode de réalisation illustré, l'extrémité libre de chaque première partie en forme de doigt 234 et l'extrémité libre de chaque deuxième partie en forme de doigt 236 présentent un profil incurvé correspondant à la section de contraction 328. L'extrémité libre de chaque première partie en forme de doigt 234 présente deux bords latéraux 241 inclinés par rapport à la direction de déplacement D de l'organe d'actionnement 300. Chaque deuxième partie en forme de doigt 236 présente deux bords latéraux 242 inclinés par rapport à la direction de déplacement D de l'organe d'actionnement 300. Pendant le processus de déplacement de l'organe d'actionnement 300 de la deuxième position vers la première position, les bords latéraux 241 de chaque première partie en forme de doigt 234 et les bords latéraux 242 de chaque deuxième partie en forme de doigt 236 peuvent coulisser le long de la surface en pente 330 de la section de contraction 328, permettant aux premières parties en forme de doigt 234 et aux deuxièmes parties en forme de doigt 236 de s'éloigner facilement de la section de contraction 328 de la partie d'espacement 324 et de se déplacer vers la section d'expansion 326 de la partie d'espacement 324.

Il peut être envisagé, dans certains autres modes de réalisation non représentés, que le dispositif de serrage par contact et le dispositif de serrage élastique puissent également présenter d'autres structures, par exemple, la première partie de serrage et la deuxième partie de serrage du dispositif de serrage élastique peuvent se présenter sous la forme de plaques plates sans inclure de parties en forme de doigt.

En référence aux figures 10 à 13B, dans le mode de réalisation illustré, l'organe d'actionnement 300 peut inclure une partie centrale 332 et un porte-à-faux 306. La partie d'espacement 324 et le porte-à-faux 306 sont placés sur des côtés opposés de la partie centrale 332 et connectés à la partie centrale 332. Dans le mode de réalisation illustré, le porte-à-faux 306 s'étend généralement le long de la direction de déplacement D de l'organe d'actionnement 300 et se présente sous la forme d'une bande plate. Le porte-à-faux 306 et la partie d'espacement 324 de l'organe d'actionnement 300 peuvent être logés respectivement dans le canal de réception 122 et la chambre de réception 126. L'organe d'actionnement 300 peut également inclure une partie tête 334 placée au sommet de la partie centrale 332. La partie tête 334 peut inclure une rainure de réception 320, pour venir en prise avec un outil (par exemple, un tournevis) afin de retirer le connecteur électrique 10 du siège de montage 20.

Dans le mode de réalisation illustré, le premier composant de boîtier 102 du boîtier 100 peut inclure une première partie de limitation 138. La première partie de limitation 138 peut se présenter sous la forme d'une saillie et être placée à l'intérieur du premier composant de boîtier 102. Le porte-à-faux 306 de l'organe d'actionnement 300 peut inclure une deuxième partie de limitation 308. La deuxième partie de limitation 308 peut se présenter sous la forme d'une saillie et être placée à l'extrémité supérieure/extrémité libre du porte-à-faux 306. La première partie de limitation 138 peut venir en butée contre la deuxième partie de limitation 308/interférer mécaniquement avec la deuxième partie de limitation 308 lorsque l'organe d'actionnement 300 est dans la première position, pour empêcher l'organe d'actionnement 300 de se déplacer vers la deuxième position. Le premier composant de boîtier 102 peut inclure deux premières parties de limitation 138, et le porte-à-faux 306 inclut une deuxième partie de limitation 308 destinée à venir en butée contre les deux premières parties de limitation 138.

Dans le mode de réalisation illustré, le premier composant de boîtier 102 peut inclure une première partie de maintien 142. L'extrémité inférieure du canal de réception 122 peut être formée en tant que première partie de maintien 142. Le porte-à-faux 306 de l'organe d'actionnement 300 peut inclure une deuxième partie de maintien 312. La deuxième partie de maintien 312 peut être placée à l'extrémité inférieure du porte-à-faux 306. La deuxième partie de maintien 312 peut s'étendre à partir du canal de réception 122 et se présenter sous la forme d'une cannelure. La deuxième partie de maintien 312 peut s'accrocher à/venir en butée contre la première partie de maintien 142/interférer mécaniquement avec la première partie de maintien 142 lorsque l'organe d'actionnement 300 est dans la première position, pour empêcher l'organe d'actionnement 300 de se déplacer par rapport au premier composant de boîtier 102 dans la direction opposée à la direction de déplacement D et de se détacher du premier composant de boîtier 102, comme le montre la figure 11B.

En référence à la figure 14A, à la figure 15A et à la figure 15B, dans le mode de réalisation illustré, le porte-à-faux 306 peut également inclure une partie d'ajustement 314. La partie d'ajustement 314 peut déformer élastiquement/dévier le porte-à-faux 306 dans une direction éloignée de la première partie de limitation 138 (autrement dit, le dévier vers la partie centrale 332) en raison d'un contact par pression avec la partie d'activation 21 pendant le processus d'insertion du connecteur électrique 10 dans le siège de montage 20. Comme le montrent les figures 15A et 15B, lorsque le connecteur électrique 10 (plus précisément, le premier composant de boîtier 102) est complètement inséré dans le siège de montage 20, la déformation élastique/déviation du porte-à-faux 306 entraîne le décalage de la deuxième partie de limitation 308 du porte-à-faux 306 et de la première partie de limitation 138 du premier composant de boîtier 102 l'une par rapport à l'autre, libérant ainsi l'organe d'actionnement 300 de toute interférence mécanique avec le premier composant de boîtier 102 pour permettre à l'organe d'actionnement 300 de se déplacer vers la deuxième position. Dans le mode de réalisation illustré, la partie d'ajustement 314 et la partie d'activation 21 se présentent toutes deux sous la forme de saillies. La partie d'ajustement 314 peut inclure une pente 316 inclinée par rapport à la direction d'insertion I du connecteur électrique 10 dans le siège de montage 20, pour guider la déformation élastique/déviation du porte-à-faux 306 dans une direction éloignée de la première partie de limitation 138 pendant le processus d'insertion du connecteur électrique 10 dans le siège de montage 20.

Dans le mode de réalisation illustré, le premier composant de boîtier 102 peut inclure une fenêtre 144. Pendant le processus d'insertion du connecteur électrique 10 dans le siège de montage 20, la partie d'activation 21 du siège de montage 20 peut s'étendre dans et à travers la fenêtre 144 pour établir un contact par pression avec la partie d'ajustement 314 de l'organe d'actionnement 300, provoquant ainsi une déformation élastique/déviation du porte-à-faux 306.

En référence à la figure 12A et à la figure 12B, dans le mode de réalisation illustré, le premier composant de boîtier 102 peut inclure une saillie de guidage 150 à l'intérieur de celui-ci. L'organe d'actionnement 300 peut inclure un canal de guidage 336 s'étendant le long de sa direction de déplacement D. À mesure que l'organe d'actionnement 300 se déplace de la première position à la deuxième position, la saillie de guidage 150 entre dans le canal de guidage 336 pour guider le déplacement de l'organe d'actionnement 300 le long de la direction de déplacement D. Lorsque l'organe d'actionnement 300 se déplace vers la deuxième position, la saillie de guidage 150 vient en butée contre l'extrémité supérieure du canal de guidage 336, pour empêcher l'organe d'actionnement 300 de se déplacer davantage le long de la direction de déplacement D.

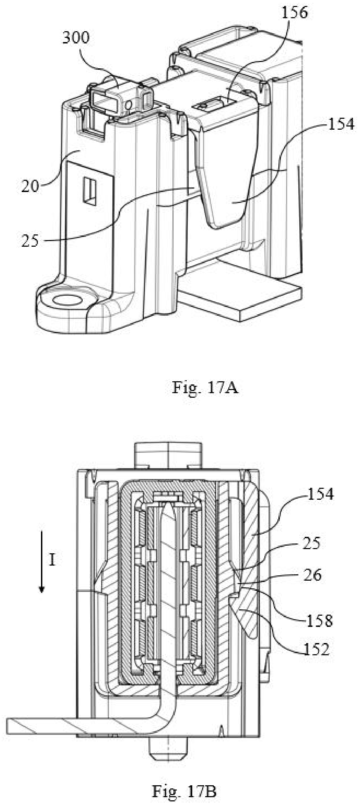

En référence aux figures 17A à 18B, dans le mode de réalisation illustré, le premier composant de boîtier 102 du connecteur électrique 10 peut également inclure une première partie de verrouillage 152. Le siège de montage 20 peut inclure une deuxième partie de verrouillage 25. La première partie de verrouillage 152 vient en prise avec la deuxième partie de verrouillage 25 lorsque le connecteur électrique 10 est complètement inséré dans le siège de montage 20, pour empêcher le connecteur électrique 10 de se déplacer dans la direction opposée à la direction d'insertion I et de se détacher du siège de montage 20. Dans le mode de réalisation illustré, le premier composant de boîtier 102 peut inclure une partie aile 154. La première partie de verrouillage 152 peut être placée à l'extrémité libre/extrémité inférieure de la partie aile 154 et se présenter sous la forme d'une cannelure. La deuxième partie de verrouillage 25 peut être placée sur l'extérieur du siège de montage 20 et se présenter sous la forme d'une nervure.

En référence à la figure 16A, dans le mode de réalisation illustré, le porte-à-faux 306 peut également inclure une surface d'appui 322 inclinée par rapport à la direction de déplacement D de l'organe d'actionnement 300. La surface d'appui 322 peut être placée sur la deuxième partie de limitation 308. Lors du déplacement de l'organe d'actionnement 300 de la deuxième position vers la première position, un outil peut être inséré dans la rainure de réception 320 de l'organe d'actionnement 300 pour appliquer une force vers le haut à l'organe d'actionnement 300. À ce stade, la partie d'activation 21 du siège de montage 20 appuie contre la surface d'appui 322, entraînant la déformation élastique/déviation du porte-à-faux 306 vers la partie centrale 332 (autrement dit, la déformation élastique/déviation dans une direction éloignée de la partie d'activation 21 du siège de montage 20 et de la première partie de limitation 138 du premier composant de boîtier 102), pour permettre à la deuxième partie de limitation 308 sur le porte-à-faux 306 de dépasser la première partie de limitation 138 sur le premier composant de boîtier 102, permettant ainsi à l'organe d'actionnement 300 de se déplacer vers la première position.

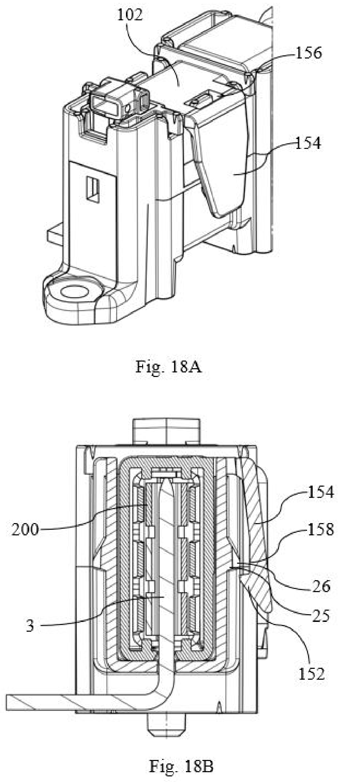

En référence aux figures 17A à 19A, dans le mode de réalisation illustré, la partie aile 154 du premier composant de boîtier 102 peut inclure une première encoche de réception 156. La deuxième partie de verrouillage 25 du siège de montage 20 peut inclure une deuxième encoche de réception 26. La première encoche de réception 156 et la deuxième encoche de réception 26 sont alignées l'une par rapport à l'autre et peuvent loger un outil (par exemple, un tournevis). La partie de la partie aile 154 opposée à la deuxième encoche de réception 26 de la deuxième partie de verrouillage 25 inclut une pente de guidage 158. La pente de guidage 158 peut être inclinée par rapport à la direction d'insertion de l'outil dans la première encoche de réception 156 et la deuxième encoche de réception 26 (qui, dans le mode de réalisation illustré, est verticalement vers le bas, c'est-à-dire dans la même direction que la direction d'insertion I du connecteur électrique 10), pour guider la partie aile 154 afin de la déformer élastiquement ou de la dévier dans une direction éloignée de la deuxième partie de verrouillage 25 lorsque l'outil est inséré dans la première encoche de réception 156 et la deuxième encoche de réception 26, libérant ainsi la première partie de verrouillage 152 de la deuxième partie de verrouillage 25 et permettant le retrait du connecteur électrique 10 du siège de montage 20, comme le montre la figure 18B.

Le processus de connexion et de déconnexion du connecteur électrique 10 de l'ensemble connecteur électrique 1 selon le deuxième mode de réalisation à/de la borne électrique 3 va maintenant être décrit en référence aux figures 9 à 18B.

Comme le montrent la figure 9, la figure 11B, la figure 14B et la figure 14C, avant que le connecteur électrique 10 (plus précisément, le premier composant de boîtier 102) ne soit inséré dans le siège de montage 20, l'organe d'actionnement 300 du connecteur électrique 10 est dans la première position. À ce stade, la première partie de limitation 138 du premier composant de boîtier 102 vient en butée contre la deuxième partie de limitation 308 de l'organe d'actionnement 300 pour empêcher l'organe d'actionnement 300 de se déplacer vers la deuxième position, et le dispositif de serrage par contact 202 et le dispositif de serrage élastique 204 sont tous deux à l'état ouvert.

En référence aux figures 14A à 15B, à mesure que le connecteur électrique 10 est inséré dans le siège de montage 20, la partie d'activation 21 du siège de montage 20 peut établir un contact par pression avec la partie d'ajustement 314 de l'organe d'actionnement 300 et guider le porte-à-faux 306 de l'organe d'actionnement 300 pour le dévier dans une direction éloignée de la première partie de limitation 138 du premier composant de boîtier 102, entraînant l'éloignement progressif de la deuxième partie de limitation 308 de l'organe d'actionnement 300 par rapport à la première partie de limitation 138 du premier composant de boîtier 102. Dans le même temps, la borne électrique 3 peut être facilement insérée dans le dispositif de serrage par contact 202 qui est à l'état ouvert, sans être soumise ou presque à la force de serrage du dispositif de serrage par contact 202.

Comme le montrent les figures 15A, 15B et 17B, lorsque le connecteur électrique 10 est complètement inséré dans le siège de montage 20, la borne électrique 3 est complètement insérée dans le dispositif de serrage par contact 202, et la première partie de verrouillage 152 du premier composant de boîtier 102 vient en prise avec la deuxième partie de verrouillage 25 du siège de montage 20 pour empêcher le connecteur électrique 10 de se détacher du siège de montage 20. Dans le même temps, la première partie de limitation 138 du premier composant de boîtier 102 et la deuxième partie de limitation 308 de l'organe d'actionnement 300 sont décalées l'une par rapport à l'autre, permettant à l'organe d'actionnement 300 d'être pressé vers le bas pour se déplacer vers la deuxième position.

Comme le montrent les figures 16A à 16C, lorsque le connecteur électrique 10 est complètement inséré dans le siège de montage 20 et que l'organe d'actionnement 300 se déplace vers la deuxième position, le dispositif de serrage par contact 202 et le dispositif de serrage élastique 204 passent à l'état fermé, soumettant la borne électrique 3 à la force de serrage de fonctionnement plus importante fournie conjointement par le dispositif de serrage par contact 202 et le dispositif de serrage élastique 204, permettant ainsi au connecteur électrique 10 d'être connecté mécaniquement et électriquement de manière fiable à la borne électrique 3.

En référence aux figures 16A à 17B, lors du démontage du connecteur électrique 10 du siège de montage 20, un outil peut d'abord être inséré dans la rainure de réception 320 de l'organe d'actionnement 300 pour appliquer une force vers le haut à l'organe d'actionnement 300. Le contact par pression entre la partie d'activation 21 du siège de montage 20 et la surface d'appui 322 de la deuxième partie de limitation 308 de l'organe d'actionnement 300 provoque la déformation élastique/déviation du porte-à-faux 306 de l'organe d'actionnement 300 vers la partie centrale 332 et à l'écart de la partie d'activation 21 du siège de montage 20 et de la première partie de limitation 138 du premier composant de boîtier 102, ce qui permet à la deuxième partie de limitation 308 sur le porte-à-faux 306 de dépasser la première partie de limitation 138 sur le premier composant de boîtier 102, permettant ainsi à l'organe d'actionnement 300 de passer de la deuxième position à la première position et à l'unité de serrage 200 de passer de l'état de fonctionnement à l'état initial. En référence aux figures 18A et 18B, un outil peut ensuite être inséré dans la première encoche de réception 156 du premier composant de boîtier 102 et la deuxième encoche de réception 26 du siège de montage 20, entraînant la libération de la première partie de verrouillage 152 du premier composant de boîtier 102 de la deuxième partie de verrouillage 25 du siège de montage 20, permettant ainsi de retirer facilement le connecteur électrique 10 du siège de montage 20 et de retirer la borne électrique 3 de l'unité de serrage 200.

Étant donné que la borne électrique 3 n'est pas soumise ou presque à une force de serrage de l'unité de serrage 200 lors de son insertion dans l'unité de serrage 200 et de son extraction de celle-ci, cela permet de connecter le connecteur électrique 10 à la borne électrique 3 et de l'en déconnecter plusieurs fois sans endommager facilement la couche de placage conductrice sur la surface de la borne électrique 3.

Il convient également de comprendre que les divers composants et caractéristiques décrits ici peuvent être constitués de divers matériaux, y compris, mais sans s'y limiter, de polymères, de caoutchoucs, de métaux et d'autres matériaux ou combinaisons de matériaux appropriés connus de l'homme du métier. Les modes de réalisation représentés sur les figures 1 à 19C illustrent uniquement la forme, le nombre, la taille et l'agencement de divers composants optionnels du connecteur électrique et de l'ensemble connecteur électrique selon la présente invention, toutefois, ils sont uniquement illustratifs et non limitatifs, et d'autres formes, tailles et agencements peuvent également être adoptés sans s'écarter de l'esprit et de la portée de la présente invention.

Le contenu technique et les caractéristiques de la présente invention ont été divulgués ci-dessus. Cependant, il peut être compris que sous le concept inventif de la présente invention, l'homme du métier peut facilement effectuer des modifications, des variations et équivalents quant à ces modes de réalisation sur la base du contenu divulgué. Par exemple, des caractéristiques représentées ou décrites dans le cadre d'un mode de réalisation peuvent être utilisées conjointement avec un autre mode de réalisation pour produire encore un autre mode de réalisation. La présente divulgation vise à couvrir de tels modifications, variations et équivalents. La description des modes de réalisation ci-dessus est donnée à titre d'exemple et n'est pas limitative, et la portée de la protection de la présente invention est déterminée par les revendications.

## Revendications

1. Connecteur électrique, **caractérisé en ce que** le connecteur électrique (10) est adapté pour être monté sur un siège de montage (20) afin d'être connecté électriquement à une borne électrique (3), et inclut :
un boîtier (100) ;
une unité de serrage (200), l'unité de serrage (200) étant au moins partiellement disposée à l'intérieur du boîtier (100), l'unité de serrage (200) ayant une partie de connexion électrique ; et
un organe d'actionnement (300), l'organe d'actionnement (300) étant apte à se déplacer par rapport au boîtier (100) entre une première position et une deuxième position ;
dans lequel l'organe d'actionnement (300) est adapté pour être dans la première position avant que le connecteur électrique (10) ne soit monté sur le siège de montage (20) et n'interfère mécaniquement avec le boîtier (100) pour empêcher l'organe d'actionnement (300) de se déplacer vers la deuxième position, et l'organe d'actionnement (300) est adapté pour se déformer en raison d'un contact par pression avec le siège de montage (20) pendant le processus de montage du connecteur électrique (10) sur le siège de montage (20), de sorte que, lorsque le connecteur électrique (10) est complètement monté dans le siège de montage (20), l'organe d'actionnement (300) se libère de toute interférence mécanique avec le boîtier (100) pour permettre à l'organe d'actionnement (300) de se déplacer vers la deuxième position ; et
dans lequel la partie de connexion électrique est adaptée pour être connectée électriquement à la borne électrique (3) lorsque l'organe d'actionnement (300) est dans la deuxième position.

2. Connecteur électrique selon la revendication 1, **caractérisé en ce que** l'organe d'actionnement (300) est associé de manière fonctionnelle à l'unité de serrage (200) ;
l'unité de serrage (200) est adaptée, lorsque l'organe d'actionnement (300) est dans la première position, pour se libérer de la borne électrique (3) ou pour serrer la borne électrique (3) avec une première force de serrage, et lorsque l'organe d'actionnement (300) est dans la deuxième position, pour serrer la borne électrique (3) avec une deuxième force de serrage, la deuxième force de serrage étant supérieure à la première force de serrage, de façon à établir une connexion électrique plus sûre.

3. Connecteur électrique selon la revendication 1 ou 2, **caractérisé en ce que** l'unité de serrage (200) est apte à commuter entre un état initial et un état de fonctionnement ;
l'unité de serrage (200) passe de l'état initial à l'état de fonctionnement en réponse au déplacement de l'organe d'actionnement (300) de la première position à la deuxième position le long de la direction de déplacement (D) de l'organe d'actionnement (300).

4. Connecteur électrique selon l'une quelconque des revendications 1 à 3, **caractérisé en ce que** l'organe d'actionnement (300) est adapté pour se déformer élastiquement en raison d'un contact par pression avec le siège de montage (20) pendant le processus de montage du connecteur électrique (10) sur le siège de montage (20).

5. Connecteur électrique selon l'une quelconque des revendications 1 à 4, **caractérisé en ce que** le boîtier (100) inclut une première partie de limitation (138), dans lequel l'organe d'actionnement (300) inclut un porte-à-faux (306), le porte-à-faux (306) inclut une deuxième partie de limitation (308), dans lequel la première partie de limitation (138) est apte à interférer mécaniquement avec la deuxième partie de limitation (308) lorsque l'organe d'actionnement (300) est dans la première position, pour empêcher l'organe d'actionnement (300) de se déplacer vers la deuxième position.

6. Connecteur électrique selon la revendication 5, **caractérisé en ce que** la première partie de limitation (138) et la deuxième partie de limitation (308) incluent respectivement une première surface de limitation (140) et une deuxième surface de limitation (310), dans lequel la première surface de limitation (140) est adaptée pour venir en butée contre la deuxième surface de limitation (310) lorsque l'organe d'actionnement (300) est dans la première position, dans lequel la première surface de limitation (140) et la deuxième surface de limitation (310) sont perpendiculaires à la direction de déplacement (D) de l'organe d'actionnement (300).

7. Connecteur électrique selon l'une quelconque des revendications 5 à 6, **caractérisé en ce que** le porte-à-faux (306) inclut une partie d'ajustement (314), le siège de montage (20) comporte une partie d'activation (21), dans lequel la partie d'ajustement (314) est adaptée pour déformer élastiquement le porte-à-faux (306) dans une direction éloignée de la première partie de limitation (138) en raison d'un contact par pression avec la partie d'activation (21) pendant le processus de montage du connecteur électrique (10) sur le siège de montage (20).

8. Connecteur électrique selon la revendication 7, **caractérisé en ce qu'**au moins l'une de la partie d'activation (21) et de la partie d'ajustement (314) inclut une pente (316) inclinée par rapport à la direction de montage (1) du connecteur électrique (10) sur le siège de montage (20).

9. Connecteur électrique selon l'une quelconque des revendications 7 à 8, **caractérisé en ce que** le porte-à-faux (306) est au moins partiellement logé à l'intérieur du boîtier (100), dans lequel le boîtier (100) inclut une fenêtre (144), dans lequel la partie d'ajustement (314) est adaptée pour s'étendre dans la fenêtre (144) pour établir un contact par pression avec la partie d'activation (21), et/ou la partie d'activation (21) est adaptée pour s'étendre dans la fenêtre (144) pour établir un contact par pression avec la partie d'ajustement (314).

10. Connecteur électrique selon l'une quelconque des revendications 1 à 9, **caractérisé en ce que** le boîtier (100) inclut une première partie de maintien (142), et l'organe d'actionnement (300) inclut une deuxième partie de maintien (312), dans lequel la première partie de maintien (142) interfère mécaniquement avec la deuxième partie de maintien (312) lorsque l'organe d'actionnement (300) est dans la première position, pour empêcher l'organe d'actionnement (300) de se détacher du boîtier (100).

11. Connecteur électrique selon la revendication 10, **caractérisé en ce que** la première partie de maintien (142) et la deuxième partie de maintien (312) se présentent toutes deux sous la forme de saillies ; ou
le boîtier (100) inclut un canal de réception (122) pour loger l'organe d'actionnement (300), l'extrémité du canal de réception (122) est formée en tant que première partie de maintien (142), et la deuxième partie de maintien (312) s'étend à partir du canal de réception (122) et se présente sous la forme d'une cannelure.

12. Connecteur électrique selon l'une quelconque des revendications 1 à 11, **caractérisé en ce que** la direction de déplacement (D) de l'organe d'actionnement (300) est dans la même direction que la direction de montage (I) du connecteur électrique (10) sur le siège de montage (20).

13. Connecteur électrique selon l'une quelconque des revendications 1 à 12, **caractérisé en ce que** l'unité de serrage (200) inclut un dispositif de serrage par contact (202) et un dispositif de serrage élastique (204), le dispositif de serrage par contact (202) est retenu à l'intérieur du boîtier (100) et conçu pour serrer la borne électrique (3), le dispositif de serrage élastique (204) est agencé sur l'extérieur du dispositif de serrage par contact (202) et conçu pour serrer le dispositif de serrage par contact (202), dans lequel le dispositif de serrage élastique (204) est fixé à l'organe d'actionnement (300) pour se déplacer avec l'organe d'actionnement (300), de sorte que : lorsque l'organe d'actionnement (300) est dans la première position, le dispositif de serrage par contact (202) soit libéré de la force de serrage du dispositif de serrage élastique (204), et lorsque l'organe d'actionnement (300) est dans la deuxième position, le dispositif de serrage par contact (202) soit soumis à la force de serrage du dispositif de serrage élastique (204).

14. Connecteur électrique selon la revendication 13, **caractérisé en ce que** le dispositif de serrage élastique (204) inclut une première partie de serrage (220) et une deuxième partie de serrage (222) pour serrer le dispositif de serrage par contact (202) entre elles, au moins l'une de la première partie de serrage (220) et de la deuxième partie de serrage (222) inclut une partie coulissante (228), dans lequel le boîtier (100) inclut une partie de guidage (132), dans lequel la partie coulissante (228) est supportée par la partie de guidage (132) et peut coulisser le long de la partie de guidage (132) pour modifier la distance entre la première partie de serrage (220) et la deuxième partie de serrage (222), dans lequel la distance diminue lorsque l'organe d'actionnement (300) se déplace de la première position à la deuxième position.

15. Connecteur électrique selon l'une quelconque des revendications 1 à 14, **caractérisé en ce que** le boîtier (100) inclut une chambre de réception (126) avec une extrémité ouverte, dans lequel l'organe d'actionnement (300) est au moins partiellement inséré dans la chambre de réception (126) à travers l'extrémité ouverte, dans lequel lorsque l'organe d'actionnement (300) est dans la deuxième position, l'organe d'actionnement (300) recouvre l'extrémité ouverte et l'unité de serrage (200) est située à l'intérieur de la chambre de réception (126).

16. Connecteur électrique selon l'une quelconque des revendications 1 à 12, **caractérisé en ce que** l'unité de serrage (200) inclut un dispositif de serrage par contact (202), le dispositif de serrage par contact (202) est retenu à l'intérieur du boîtier (100) et conçu pour serrer la borne électrique (3), dans lequel l'organe d'actionnement (300) est au moins partiellement disposé à l'intérieur du dispositif de serrage par contact (202) et conçu pour faire passer le dispositif de serrage par contact (202) d'un état ouvert à un état fermé de manière correspondante lors du déplacement de la première position à la deuxième position.

17. Connecteur électrique selon la revendication 16, **caractérisé en ce que** le dispositif de serrage par contact (202) inclut une première partie de contact (206) et une deuxième partie de contact (208) pour serrer la borne électrique (3) entre elles, dans lequel l'organe d'actionnement (300) inclut une partie d'espacement (324), la partie d'espacement (324) est disposée entre la première partie de contact (206) et la deuxième partie de contact (208), et dans lequel la première partie de contact (206) et la deuxième partie de contact (208) sont en contact par pression avec la partie d'espacement (324) lorsque l'organe d'actionnement (300) est dans la première position pour ouvrir le dispositif de serrage par contact (202), et se libèrent de tout contact avec la partie d'espacement (324) lorsque l'organe d'actionnement (300) se déplace vers la deuxième position pour fermer le dispositif de serrage par contact (202).

18. Connecteur électrique selon la revendication 17, **caractérisé en ce que** la partie d'espacement (324) inclut une section d'expansion (326) et une section de contraction (328) adjacentes l'une à l'autre dans la direction de déplacement (D) de l'organe d'actionnement (300), dans lequel la première partie de contact (206) et la deuxième partie de contact (208) sont alignées avec et en contact par pression avec la section d'expansion (326) lorsque l'organe d'actionnement (300) est dans la première position, et sont alignées avec la section de contraction (328) lorsque l'organe d'actionnement (300) est dans la deuxième position.

19. Connecteur électrique selon la revendication 16, **caractérisé en ce que** l'unité de serrage (200) inclut également un dispositif de serrage élastique (204), le dispositif de serrage élastique (204) est agencé sur l'extérieur du dispositif de serrage par contact (202) et conçu pour serrer le dispositif de serrage par contact (202).

20. Connecteur électrique selon l'une quelconque des revendications 13 à 19, **caractérisé en ce que** le connecteur électrique (10) inclut au moins deux unités de serrage (200) et au moins deux organes d'actionnement (300), chaque organe d'actionnement (300) est associé de manière fonctionnelle à une unité de serrage (200) correspondante, dans lequel le connecteur électrique (10) inclut également un conducteur (400), le conducteur (400) est connecté électriquement aux dispositifs de serrage par contact (202) des au moins deux unités de serrage (200).

21. Ensemble connecteur électrique, **caractérisé en ce que** l'ensemble connecteur électrique (1) inclut un siège de montage (20) et le connecteur électrique (10) selon l'une quelconque des revendications 1 à 20, dans lequel le siège de montage (20) inclut une partie d'activation (21), le connecteur électrique (10) est adapté pour être monté sur le siège de montage (20) afin d'être connecté électriquement à la borne électrique (3).

22. Ensemble connecteur électrique selon la revendication 21, **caractérisé en ce que** le boîtier (100) du connecteur électrique (10) inclut une première partie de verrouillage (152), le siège de montage (20) inclut une deuxième partie de verrouillage (25), dans lequel la première partie de verrouillage (152) vient en prise avec la deuxième partie de verrouillage (25) lorsque le connecteur électrique (10) est complètement monté dans le siège de montage (20), pour empêcher le connecteur électrique (10) de se détacher du siège de montage (20).

23. Ensemble connecteur électrique selon la revendication 22, **caractérisé en ce que** le boîtier (100) inclut une partie aile (154), la première partie de verrouillage (152) est placée à l'extrémité libre de la partie aile (154) et se présente sous la forme d'une cannelure, dans lequel la deuxième partie de verrouillage (25) se présente sous la forme d'une nervure.

24. Ensemble connecteur électrique selon l'une quelconque des revendications 21 à 23, **caractérisé en ce que** le siège de montage (20) est conçu pour être approprié pour entourer la borne électrique (3).
